# EUROPEAN PATENT APPLICATION

(11) **EP 3 217 346 A1**
(43) Date of publication of application: **13.09.2017**
(21) Application number: 16205376.3
(22) Date of filing: 20.12.2016
(51) Int. Cl.: G06Q 30/04

(54) **SALES DATA PROCESSING APPARATUS AND SALES DATA PROCESSING METHOD**

(30) Priority: 07.03.2016 JP 2016043043
(71) Applicant: Casio Computer Co., Ltd., Tokyo 151-8543 (JP)
(72) Inventor: ITAKURA, Katsuyuki, Tokyo, 205-8555 (JP)
(74) Representative: Plougmann Vingtoft a/s

(57) **Abstract**

A sales data processing apparatus of the invention includes an acceptance unit that accepts sale registration of an item or service, and an output unit that derives a tax amount or tax-inclusive price of the item or service whose sale registration has been accepted by the acceptance unit based on a predetermined tax rate, and output the derived tax amount or tax-inclusive price, and if a first tax rate is applied to the item or service whose sale registration has been accepted by the acceptance unit, the output unit derives a difference between a tax amount or tax-inclusive price of a case where the first tax rate is applied to the item or service and a tax amount or tax-inclusive price of a case where a second tax rate different from the first tax rate is applied to the item or service, and also outputs the derived difference.

## Description

### BACKGROUND OF THE INVENTION

### 1. Field of the Invention

The present disclosure relates to a sales data processing apparatus and a sales data processing method

### 2. Description of the Related Art

On 31 March 2015, Japan passed and enacted the 2015 tax reform bill at a plenary session of the House of Councilors to raise the consumption tax to 10% in April 2017. A reduced tax rate system is also planned to be introduced with consideration given to low-income earners with the consumption tax rate increase to 10%. (However, later on 1 June 2016, it was officially announced that the consumption tax rate increase to 10% is delayed to October 2019.)

The reduced tax rate system to be introduced this time is a system that leaves the consumption tax rate unchanged at 8% for a part of items that largely influence low-income earners. Subject items of the reduced tax rate system are the transfer of food and beverages, and fees for subscriptions to newspapers issued at least twice a week. However, in the transfer of food and beverages, the provision of meals by operators engaged in the restaurant business and the like in places with a certain dining facility are excluded from the subject items of the reduced tax rate system. In other words, dining out in the transfer of food and beverages is subject to the standard tax rate.

Specifically, examples of food and beverages that do not correspond to dining out and are subject to the reduced tax rate include takeouts from beef bowl restaurants and hamburger restaurants, deliveries from buckwheat noodle restaurants, deliveries from pizza restaurants, light meals at stalls, takeouts from sushi restaurants, and packed lunches and delicatessen of convenience stores. Moreover, examples of food and beverages that correspond to dining out and are subject to the standard tax rate include eating in beef bowl restaurants, hamburger restaurants, buckwheat noodle restaurants, pizza restaurants, and sushi restaurants, light meals at food courts, food and beverages provided assuming drinking and eating at eat-in corners of convenience stores, catering, and chef catering.

The provision of meals is categorized into dining out in the reduced tax rate system if meals are provided by food business operators defined in the Food Sanitation Act in places with a dining facility to eat in. Moreover, cooking and the like in places designated at orders of clients are also categorized into dining out.

As a technology supporting such a plurality of tax rates, an electronic cash register is disclosed which calculates the tax amount of each of a plurality of taxable items in accordance with a tax amount calculation method preset in a TAX table in one item registration process on a bundle of items including the plurality of taxable items, and prints the taxable amount on a receipt (JP 2003-256937 A).

### SUMMARY OF THE INVENTION

However, a customer needs to calculate the difference from an amount at the standard tax rate in the reduced tax rate system by mental arithmetic or the like when using the electronic cash register of the above-mentioned known technology.

For example, if an item subject to the standard tax rate is registered as 2200 yen including tax, and an item subject to the reduced tax rate is registered as 2160 yen including tax, the difference from the amount at the standard tax rate in the reduced tax rate system is 40 yen. However, the difference could not be read directly from the display of the receipt. Hence, it was not easy for customers to readily realize the benefit of the reduced tax rate system.

Hence, an object of the present disclosure is to enable customers of a store to readily realize the benefit of the reduced tax rate system with a sales data processing apparatus and a sales data processing program.

A sales data processing apparatus of the present invention includes: an acceptance unit configured to accept sale registration of an item or service; and an output unit configured to derive a tax amount or tax-inclusive price of the item or service whose sale registration has been accepted by the acceptance unit based on a predetermined tax rate, and output the derived tax amount or tax-inclusive price, wherein upon the item or service whose sale registration has been accepted by the acceptance unit being an item or service to which a first tax rate is applied, the output unit derives a difference between a tax amount or tax-inclusive price of a case where the first tax rate is applied to the item or service and a tax amount or tax-inclusive price of a case where a second tax rate different from the first tax rate is applied to the item or service, and also output the derived difference.

A sales data processing method of the present invention includes the steps of: accepting sale registration of an item or service; and deriving a tax amount or tax-inclusive price of the item or service whose sale registration has been accepted in the acceptance step based on a predetermined tax rate, and outputting the derived tax amount or tax-inclusive price, wherein the output step includes, upon the item or service whose sale registration has been accepted in the acceptance step being an item or service to which a first tax rate is applied, deriving a difference between a tax amount or tax-inclusive price of a case where the first tax rate is applied to the item or service and a tax amount or tax-inclusive price of a case where a second tax rate different from the first tax rate is applied to the item or service, and also outputting the derived difference.

The present disclosure enables customers of a store to readily realize the benefit of the reduced tax rate system.

### BRIEF DESCRIPTION OF THE DRAWINGS

Figs. 1A and 1B are external views of an electronic cash register according to a first embodiment;
Fig. 2 is a block diagram illustrating the configuration of the electronic cash register;
Fig. 3 is a diagram describing a department table;
Fig. 4 is a diagram descripting a PLU file;
Fig. 5 is a diagram illustrating an input unit of the electronic cash register;
Fig. 6 is a flowchart illustrating an item registration process;
Figs. 7A to 7E are diagrams illustrating an example of a checkout in a case of tax-inclusive pricing;
Figs. 8A and 8B are diagrams illustrating examples of receipts in the case of tax-inclusive pricing;
Fig. 9 is a diagram illustrating an example of a receipt in the case of tax-inclusive pricing;
Figs. 10A to 10E are diagrams illustrating an example of a checkout in a case of tax-exclusive pricing;
Fig. 11 is a diagram illustrating an example of a receipt in the case of tax-exclusive pricing;
Figs. 12A to 12E are diagrams illustrating an example of a checkout with PLUs;
Fig. 13 is a diagram illustrating an example of a receipt with PLUs;
Figs. 14A and 14B are external views of an electronic cash register according to a second embodiment;
Fig. 15 is a block diagram illustrating the configuration of the electronic cash register;
Fig. 16 is a diagram describing a PLU table;
Fig. 17 is a flowchart illustrating an item registration process;
Figs. 18A to 18E are diagrams illustrating operations and displays of when two apples and an orange are registered as items, including tax, in a case where a customer display unit can display three lines;
Figs. 19A to 19E are diagrams illustrating operations and displays of when two apples and an orange are registered as items, including tax, in a case where the customer display unit can display multiple lines;
Figs. 20A to 20E are diagrams illustrating operations and displays of when two apples and an orange are registered as items, including tax, in a case where the customer display unit can display only one line;
Fig. 21 is a diagram illustrating a receipt of when two apples and an orange have been registered as items, including tax;
Figs. 22A to 22E are diagrams illustrating operations and displays of when two apples and a toothbrush are registered as items, including tax, in the case where the customer display unit can display three lines;
Figs. 23A to 23E are diagrams illustrating operations and displays of when two apples and a toothbrush are registered as items, including tax, in the case where the customer display unit can display multiple lines;
Figs. 24A to 24E are diagrams illustrating operations and displays of when two apples and an orange are registered as items, including tax, in the case where the customer display unit can display only one line;
Fig. 25 is a diagram illustrating a receipt of when two apples and a toothbrush have been registered as items, including tax;
Figs. 26A to 26C are diagrams illustrating operations and displays of when a toothbrush is registered as an item, including tax, in the case where the customer display unit can display three lines;
Figs. 27A to 27C are diagrams illustrating operations and displays of when a toothbrush is registered as an item, including tax, in the case where the customer display unit can display multiple lines;
Figs. 28A to 28C are diagrams illustrating operations and displays of when a toothbrush is registered as an item, including tax, in the case where the customer display unit can display only one line;
Fig. 29 is a diagram illustrating a receipt of when a toothbrush has been registered as an item, including tax;
Figs. 30A to 30E are diagrams illustrating operations and displays of when two apples and an orange are registered as items, excluding tax, in the case where the customer display unit can display multiple lines;
Fig. 31 is a diagram illustrating a receipt of when apples and an orange have been registered as items, excluding tax;
Figs. 32A to 32E are diagrams illustrating operations and displays of when two apples and a toothbrush are registered as items, excluding tax, in the case where the customer display unit can display multiple lines;
Fig. 33 is a diagram illustrating a receipt of when two apples and a toothbrush have been registered as items, excluding tax;
Figs. 34A to 34C are diagrams illustrating operations and displays of when a toothbrush is registered as an item, excluding tax, in the case where the customer display unit can display multiple lines;
Fig. 35 is a diagram illustrating a receipt of when a toothbrush has been registered as an item, excluding tax;
Figs. 36A to 36C are diagrams illustrating operations and displays of when a beef bowl to go is registered as an item, including tax, in the case where the customer display unit can display three lines;
Figs. 37A to 37C are diagrams illustrating operations and displays of when a beef bowl to go is registered as an item, including tax, in the case where the customer display unit can display multiple lines;
Figs. 38A to 38C are diagrams illustrating operations and displays of when a beef bowl to go is registered as an item, including tax, in the case where the customer display unit can display only one line;
Fig. 39 is a diagram illustrating a receipt of when a beef bowl to go has been registered as an item, including tax;
Figs. 40A to 40C are diagrams illustrating operations and displays of when a beef bowl to eat in is registered as an item, including tax, in the case where the customer display unit can display three lines;
Figs. 41A to 41C are diagrams illustrating operations and displays of when a beef bowl to eat in is registered as an item, including tax, in the case where the customer display unit can display multiple lines;
Figs. 42A to 42C are diagrams illustrating operations and displays of when a beef bowl to eat in is registered as an item, including tax, in the case where the customer display unit can display only one line;
Fig. 43 is a diagram illustrating a receipt of when a beef bowl to eat in has been registered as an item, including tax;
Figs. 44A to 44C are diagrams illustrating operations and displays of when a beef bowl to go is registered as an item, excluding tax, in the case where the customer display unit can display multiple lines;
Fig. 45 is a diagram illustrating a receipt of when a beef bowl to go has been registered as an item, excluding tax;
Figs. 46A to 46C are diagrams illustrating operations and displays of when a beef bowl to eat in is registered as an item, excluding tax, in the case where the customer display unit can display multiple lines; and
Fig. 47 is a diagram illustrating a receipt of when a beef bow to eat in has been registered as an item, excluding tax.

### DETAILED DESCRIPTION OF THE PREFERRED EMBODIMENTS

Modes for carrying out the present disclosure are described in detail hereinafter with reference to the drawings.

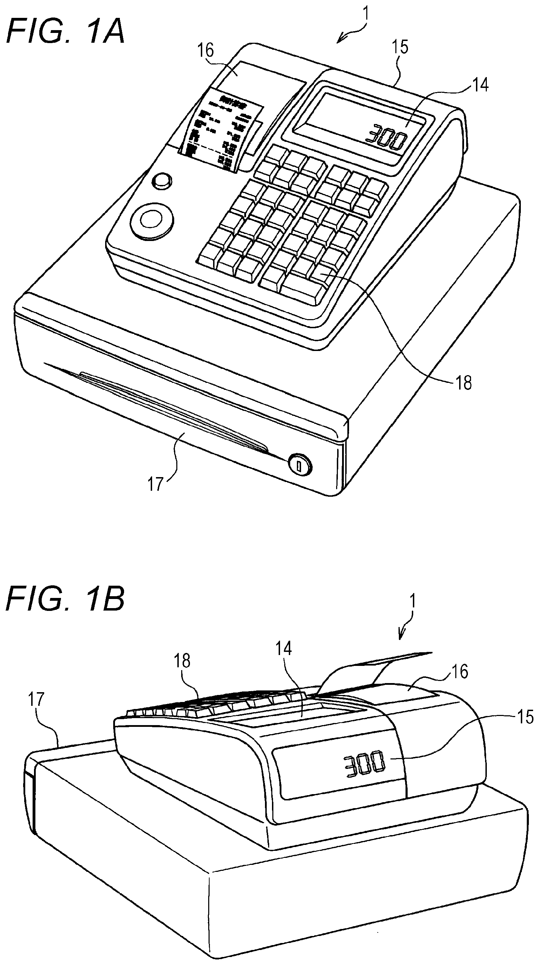

Figs. 1A and 1B are external views of an electronic cash register 1 according to a first embodiment.

The electronic cash register 1 is of a compact type for small stores, to which a housing is provided on top of a drawer 17. The present disclosure is not limited to the electronic cash register 1, and may be applied to a highly functional POS (Point Of Sales) terminal equipped with a barcode scanner function.

Fig. 1A is an external view of the housing when viewed diagonally from the front.

The electronic cash register 1 is configured including an input unit 18 and a display unit 14, which are provided on an upper surface of the housing, a customer display unit 15 provided at the back of the housing (on a hidden surface), and a printing unit 16 provided on the left-hand side of the housing. The drawer 17 can be placed separated from the housing of the electronic cash register 1.

Fig. 1B is an external view of the housing when viewed diagonally from the back.

The customer display unit 15 is provided at the back of the housing of the electronic cash register 1. The customer display unit 15 is readily visible to a customer of a store when the customer stands facing a clerk across the electronic cash register 1.

An operator of the electronic cash register 1 can register an item by inputting the unit price and department of an item through the input unit 18, displaying a subtotal, and then inputting an amount tendered. Upon item registration, the electronic cash register 1 opens the drawer 17 to allow the operator to put the cash tendered in it.

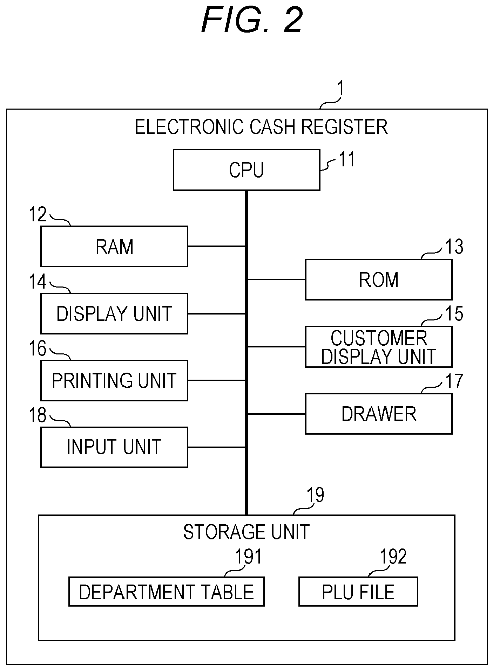

Fig. 2 is a block diagram illustrating the configuration of the electronic cash register 1.

In Fig. 2, the electronic cash register 1 includes a CPU (Central Processing Unit) 11, a RAM (Random Access Memory) 12, a ROM (Read Only Memory) 13, the display unit 14, the customer display unit 15, the printing unit 16, the drawer 17, the input unit 18, and a storage unit 19. Each unit is connected by a bus.

The CPU 11 develops an application program specified from various application programs for the electronic cash register 1 stored in the ROM 13 and the storage unit 19, and various instructions input from the input unit 18, into work memory in the RAM 12.

The CPU 11 further executes various processes following the application program developed in the work memory in accordance with the input instructions and input data, and stores the process results in the work memory in the RAM 12 and also displays the process results on the display unit 14 and the customer display unit 15. The CPU 11 then saves the process results stored in the work memory in save destinations, which are instructed from the input unit 18, in the storage unit 19.

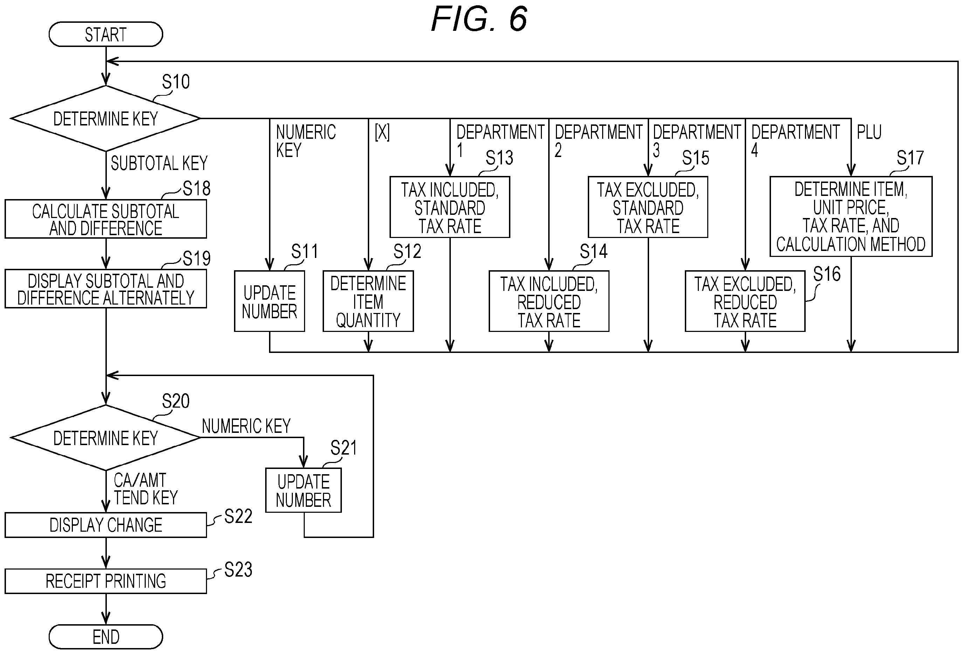

Moreover, in an item registration process (see Fig. 6) described below, the CPU 11 analyzes an instruction content input from the input unit 18 and, if the instruction content is any of department codes, searches a department table 191 stored in the storage unit 19, registers an item of the applicable department, and calculates the tax amount and the like of the item. In a general process, the CPU 11 analyzes an instruction content input from the input unit 18, and executes a closing process if the instruction content is closing, or executes a process in accordance with another instruction content.

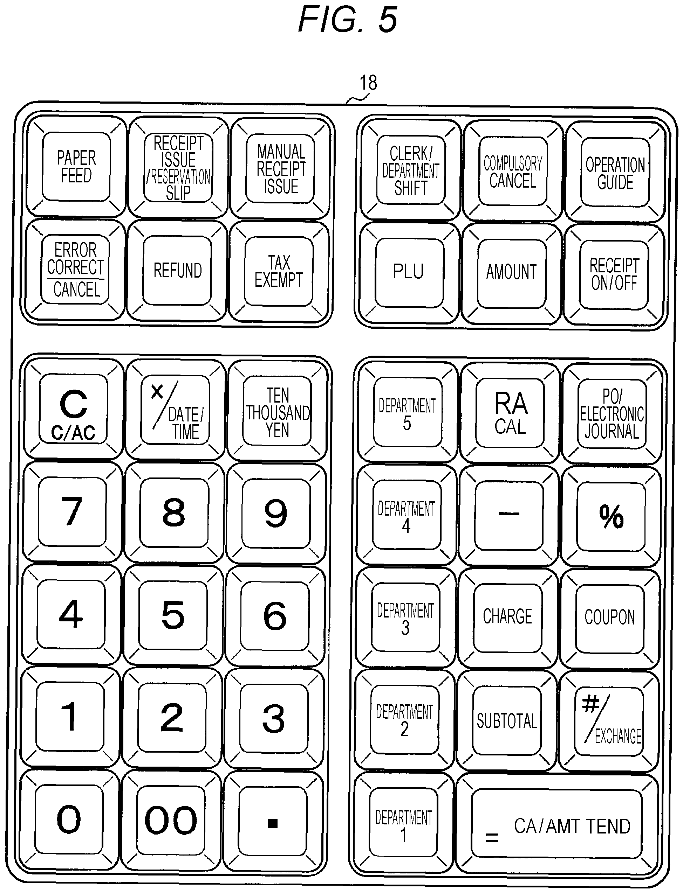

The input unit 18 includes a keyboard with various function keys including a department key, a ca/amt tend key, and a clear key, and numeric input keys, and outputs, to the CPU 11, a press signal indicating a press on the keyboard. The input unit 18 functions as an acceptance unit configured to accept sale registration of an item or service. The configuration of the input unit 18 is described in detail in Fig. 5 described below.

The input unit 18 is not limited to the keyboard and can be anything that can input instructions. For example, the input unit 18 may sense coordinates instructed by an input pen, fingertip, or the like as in a touch panel (touchscreen), and detect the position coordinates instructed on, for example, an electromagnetic induction, magnetostrictive, or pressure-sensitive coordinate reading principle. In this case, the input unit 18 uses the detected position coordinates as a position signal, and outputs it to the CPU 11.

The display unit 14 and the customer display unit 15 each include, for example, a liquid crystal display or organic EL display, and supports display in Chinese characters, Hiragana, and Katakana. The electronic cash register 1 generates a signal based on display data input by the CPU 11, and provides various displays on the display unit 14 and the customer display unit 15.

The printing unit 16 is, for example, a heat transfer printer, and prints out receipt information on roll paper (receipt paper). At the instruction of the CPU 11, the printing unit 16 outputs, on a receipt, the difference between the tax amount of an item or service to which the reduced tax rate is applied, and the tax amount of a case where the standard tax rate is applied to the item or service, based on the price and tax rate of the item or service.

The drawer 17 is a portion where cash is stored, and can be opened by the operator operating the electronic cash register 1.

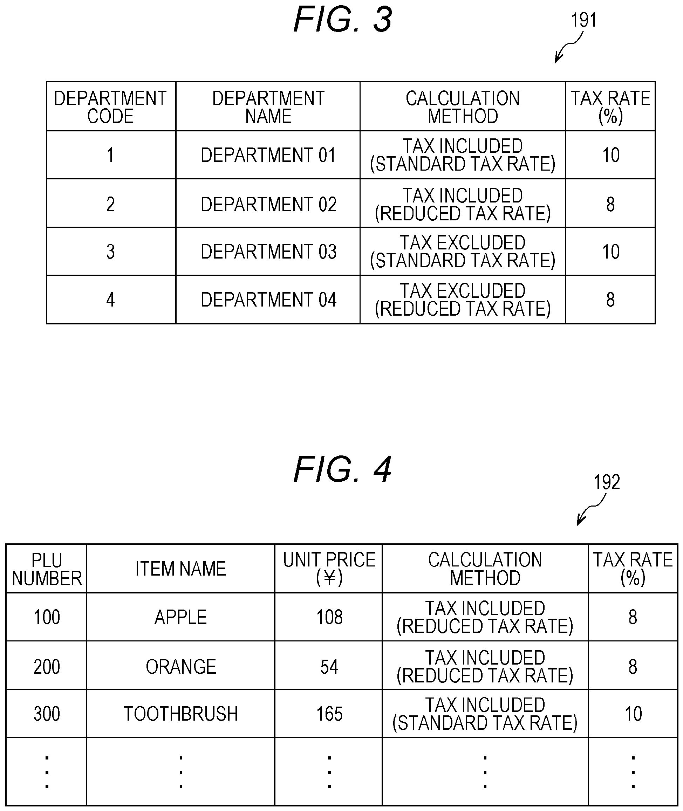

The storage unit 19 includes a rewritable storage medium such as a magnetic or optical storage medium, or a semiconductor memory. The storage unit 19 stores a system program and various application programs for the system, data processed by these programs, and the like, in addition to the department table 191 and a PLU (Price Look Up) file 192. The department table 191 is described in detail in Fig. 3 described below. The PLU file 192 is described in detail in Fig. 4 described below.

The CPU 11 functions as an output unit configured to refer to the department table 191 and the PLU file 192, derive a tax amount or tax-inclusive price of an item or service whose sale registration has been accepted based on a predetermined tax rate, and output the derived tax amount or tax-inclusive price to the display unit 14, the customer display unit 15, and the printing unit 16.

Moreover, it may be configured such that all or part of the programs, the data, and the like to be stored in the storage unit 19 are received from another apparatus such as a server or client via a transmission medium such as a network line, and are stored. Furthermore, the storage unit 19 may be a recording medium of a server constructed on a network. Furthermore, it may be configured such that each program is transferred to a server and a client via a transmission medium such as a network line, and installed in these apparatuses.

Fig. 3 is a diagram describing the department table 191.

The department table 191 is configured including a department code field, a department name field, a calculation method field, and a tax rate field. Consequently, a correspondence between each department key and its tax calculation method is indicated.

Department 1 is a department for a case where a tax-inclusive price is input for an item to which the standard tax rate of 10% is applied. Tax-inclusive pricing is pricing where an item sells at a purchase price including the consumption tax. When a user selects a department 1 key, "department 01" in the department name field is displayed on the display unit 14, and also a tax amount and a tax-inclusive price are calculated with "tax included" described in the calculation method field at a tax rate of 10% described in the tax rate field.

Department 2 is a department for a case where a tax-inclusive price is input for an item to which the reduced tax rate of 8% is applied. When the user selects a department 2 key, "department 02" in the department name field is displayed on the display unit 14, and also a tax amount and a tax-inclusive price are calculated with "tax included" described in the calculation method field at a tax rate of 8% described in the tax rate field.

Department 3 is a department for a case where a tax-exclusive price is input for an item to which the standard tax rate of 10% is applied. Tax-exclusive pricing is pricing where an item sells at a purchase price excluding the consumption tax. When the user selects a department 3 key, "department 03" in the department name field is displayed on the display unit 14, and also a tax amount and a tax-inclusive price are calculated with "tax excluded" described in the calculation method field at the tax rate of 10% described in the tax rate field.

Department 4 is a department for a case where a tax-exclusive price is input for an item to which the reduced tax rate of 8% is applied. When the user selects a department 4 key, "department 04" in the department name field is displayed on the display unit 14, and also a tax amount and a tax-inclusive price are calculated with "tax excluded" described in the calculation method field at the tax rate of 8% described in the tax rate field.

Fig. 4 is a diagram describing the PLU file 192.

The PLU file 192 is configured including a PLU number field, an item name field, a unit price field, a calculation method field, and a tax rate field. Consequently, it is possible to indicate a correspondence between a PLU number and an item/unit price/calculation method/tax rate.

An item code related to the item is stored in the PLU number field. An item name related to the item is stored in the item name field. A unit price calculated by a tax calculation method applicable to the item is stored in the unit price field. A tax amount calculation method applicable to the item is stored in the calculation method field. For example, if "tax included (standard tax rate)" or "tax included (reduced tax rate)" is stored in the calculation method field, a tax-inclusive unit price is stored in the unit price field. If "tax excluded (standard tax rate)" or "tax excluded (reduced tax rate)" is stored in the calculation method field, a tax-exclusive unit price is stored in the unit price field. A tax rate for the item is stored in the unit of percentage in the tax rate field.

Fig. 5 is a diagram illustrating the configuration of the input unit 18 of the electronic cash register 1.

The input unit 18 includes a group of keys placed in a matrix with seven rows and six columns. The group of keys is divided into approximately four. Keys used for the registration of an item are mainly placed in the bottom left and right sections. The bottom left and right sections of the group of keys are described here. Part of a description of the top left and right sections is omitted.

The "C" (clear) key belonging to the bottom left section is used when the operator has made a mistake in input. A "×/date/time" key is used for multiplication registration, and also used to display the date and time. A "ten thousand yen" key is used when a ten-thousand yen bill is received.

Numeric keys such as "9" to "0", "00", and "●" are used to input numeric values.

The "department 1" key to a "department 5" key, which belong to the bottom right section are used when the operator registers items. A "subtotal" key is used to see the total (intermediate total) of the registered amounts. The "ca/amt tend" key is used to complete the registration or for cash tendered.

In addition, an "RA" key is used when cash is received on account. A "PO" key is used when cash is paid out and also when an electronic journal report is issued. A "-" key is used for a price reduction. A "%" key is used for a discount. A "charge" (credit sale) key is used for a credit card sale. A "coupon" (coupon sale) key is used at the time of a sale with a coupon. A "#/exchange" key is used to print a number or exchange money. A "PLU" key is used to specify an item with a PLU number.

Fig. 6 is a flowchart illustrating the item registration process.

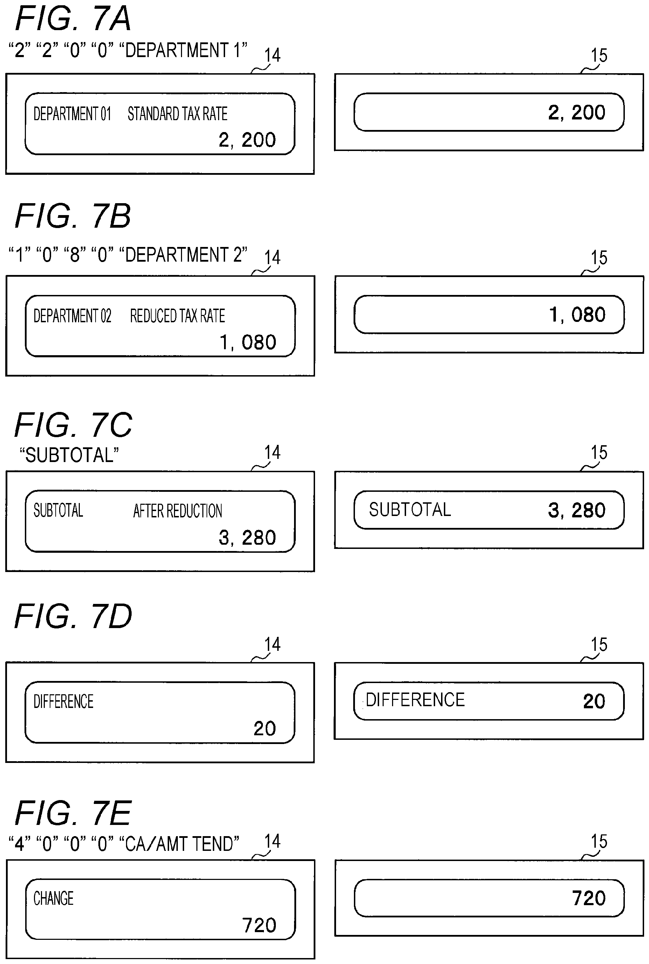

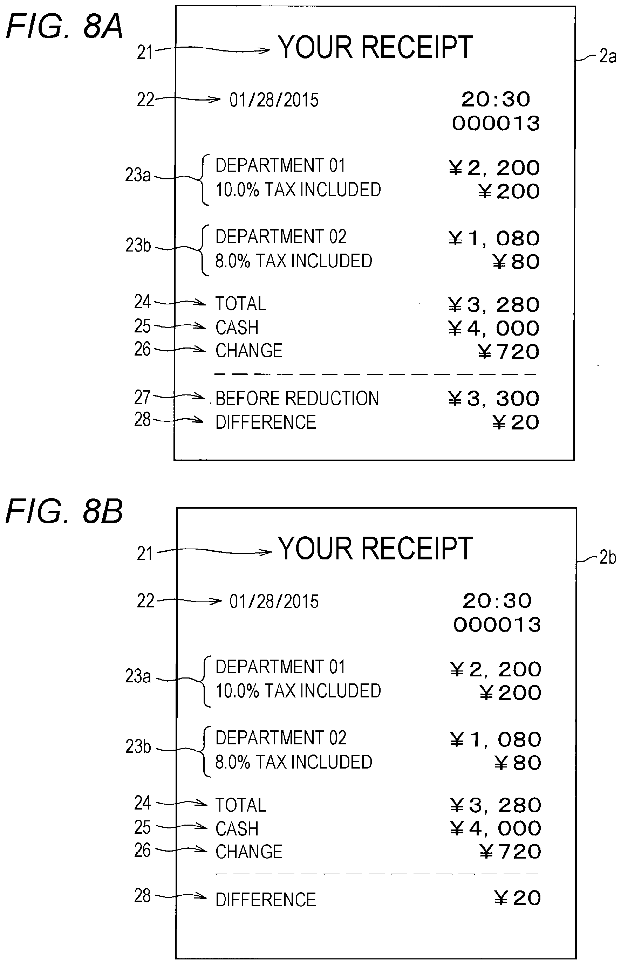

The CPU 11 of the electronic cash register 1 repeats processing of steps S10 to S23 on a transaction-per-customer basis. Figs. 7A to 7E and 8A and 8B described below illustrate display examples of the display unit 14 and the customer display unit 15 at the time of a transaction. Moreover, whenever the operator registers an item, the CPU 11 repeats the processing of steps S10 to S 17.

The CPU 11 determines which key of the input unit 18 has been input (step S10).

If the numeric key of the input unit 18 has been pressed in step S10, the CPU 11 updates the number on the display unit 14 and the customer display unit 15 (step S11), and returns to the processing of step S10.

If the "×" key has been pressed in step S10, the CPU 11 proceeds to step S12 of determining the number on the display unit 14 and the customer display unit 15 as an item quantity, and returns to the processing of step S10. Specifically, when the operator inputs the item quantity, it is simply required to input an item quantity with the numeric key and then press the "×" key.

The CPU 11 proceeds to step S 13 of determining the number on the display unit 14 and the customer display unit 15 as the standard tax rate and tax-inclusive pricing if the "department 1" key has been pressed in step S10, and proceeds to step S14 of determining the number on the display unit 14 and the customer display unit 15 as the reduced tax rate and tax-inclusive pricing to return to the processing of step S10 if the "department 2" key has been pressed.

Specifically, when the operator inputs the price of an item with the numeric keys and then presses the "department 1" key, the item price subject to the standard tax rate is input with tax-inclusive pricing. Moreover, when the operator inputs the price of an item with the numeric keys and then presses the "department 2" key, the item price subject to the reduced tax rate is input with tax-inclusive pricing.

The CPU 11 determines the number on the display unit 14 and the customer display unit 15 as the standard tax rate and tax-exclusive pricing (step S 15) if the "department 3" key has been pressed in step S10, and determines the number on the display unit 14 and the customer display unit 15 as the reduced tax rate and tax-excluding pricing (step S16) to return to the processing of step S10 if the "department 4" key has been pressed.

Specifically, when the operator inputs the price of an item subject to the standard tax rate with tax-exclusive pricing, it is simply required to input the price of the item with the numeric keys and then press the "department 3" key. Moreover, when the operator inputs the price of an item subject to the reduced tax rate with tax-exclusive pricing, it is simply required to input the price of the item with the numeric keys and then press the "department 4" key.

If the "PLU" key has been pressed in step S10, the CPU 11 proceeds to step S17 of determining an item, a unit price, a tax rate, and a calculation method using the number on the display unit 14 and the customer display unit 15 as a PLU number, and then returns to the processing of step S10. Specifically, when the operator specifies an item with a PLU number, it is simply required to input the PLU number with the numeric keys and then press the "PLU" key.

If the "subtotal" key has been pressed in step S10, the CPU 11 calculates a subtotal and a difference (step S18). The difference here indicates a difference between a standard tax amount and a reduced tax amount. In other words, if an item or service whose sale registration has been accepted is an item to which the reduced tax rate (first tax rate) is applied, the CPU 11 derives a difference between a tax amount or tax-inclusive price of when the reduced tax rate is applied to the item or service and a tax amount or tax-inclusive price of when the standard tax rate (second tax rate) is applied to the item or service. In other words, if the item whose sale registration has been accepted is an item to which the reduced tax rate (first tax rate) is applied, the CPU 11 derives a difference between the tax amount of when the reduced tax rate is applied to the item and the tax amount of when the standard tax rate (second tax rate) is applied to the item, and also outputs the derived difference to the display unit 14 and the customer display unit 15.

While displaying the subtotal and the difference alternately on the display unit 14 and the customer display unit 15 (step S19), the CPU 11 determines which key of the input unit 18 has been input (step S20). If the numeric key has been pressed, the CPU 11 updates the number on the display unit 14 and the customer display unit 15 (step S21), and returns to the processing of step S20.

If the "ca/amt tend" key has been pressed in step S20, the CPU 11 calculates and displays a change (step S22), causes the printing unit 16 to print a receipt (step S23), and ends the processing of Fig. 6. Print examples of this receipt are illustrated in Figs. 8A and 8B, 9, and 11 described below.

Figs. 7A to 7E are diagrams illustrating display examples of a checkout in a case of tax-inclusive pricing. These display examples in Figs. 7A to 7E illustrate an example where the operator inputs an item of 2200 yen to which the standard tax rate is applied and an item of 1080 yen to which the reduced tax rate is applied, and displays a subtotal, and then receives cash of 4000 yen.

Fig. 7A illustrates display examples of the display unit 14 and the customer display unit 15 of when the operator presses "2", "2", "0", "0", and "department 1" sequentially.

"Department 01" and "standard tax rate" are displayed in the first line of the display unit 14. The amount "2,200" is displayed in the second line. The amount "2,200" is displayed on the customer display unit 15.

Fig. 7B illustrates display examples of the display unit 14 and the customer display unit 15 of when the operator presses "1", "0", "8", "0", and "department 2" sequentially.

"Department 02" and "reduced tax rate" are displayed in the first line of the display unit 14. The amount "1,080" is displayed in the second line. The amount "1,080" is displayed on the customer display unit 15.

Fig. 7C illustrates first display examples of the display unit 14 and the customer display unit 15 of when the operator presses "subtotal."

"Subtotal" and "after reduction" are displayed in the first line of the display unit 14. An amount "3,280" is displayed in the second line. The amount "3,280" is displayed on the customer display unit 15.

Fig. 7D illustrates second display examples of the display unit 14 and the customer display unit 15 of when the operator presses "subtotal."

"Difference" is displayed in the first line of the display unit 14. A difference "20" is displayed in the second line. "Difference" and the difference "20" are displayed on the customer display unit 15.

The first and second display examples are alternately displayed. Accordingly, a customer of a store can find the subtotal and the difference easily.

Fig. 7E illustrates display examples of the display unit 14 and the customer display unit 15 of when the operator presses "4", "0", "0", "0", and "ca/amt tend" sequentially.

"Change" is displayed in the first line of the display unit 14. The amount of change "720" is displayed in the second line. The amount of change "720" is displayed on the customer display unit 15. Consequently, the operator can easily see that the change is 720 yen.

Fig. 8A is a diagram illustrating a first print example of a receipt in a case of tax-inclusive pricing.

A receipt 2a includes a title field 21, a date and time field 22, a plurality of item fields 23a and 23b, a total field 24, a cash field 25, and a change field 26, which are printed on roll paper.

"Your receipt" is printed in the title field 21. The date and time of a checkout is printed in the date and time field 22. The item field 23a including a department, an amount, "10% tax included," and the amount of the consumption tax, and the item field 23b including a department, an amount, "8% tax included," and the amount of the consumption tax are printed below the date and time field 22. Furthermore, the total amount "¥3,280" is printed in the total field 24. The total amount is the amount after the reduction.

The amount "¥4,000" tendered by the customer is printed in the cash field 25. The amount of change "¥720" due to the customer is printed in the change field 26.

Furthermore, a before-reduction field 27 and a difference field 28 are printed on the receipt 2a.

An amount "¥3,300" before the reduction when all items are subject to the standard tax rate is printed in the before-reduction field 27. "¥20" being the difference between the pre-reduction amount and the post-reduction amount is printed in the difference field 28. Consequently, the customer of the store can easily grasp how much he/she benefited from the reduced tax rate system.

A difference description area where the difference field 28 is printed is printed below a breakdown area including the total field 24 where the amount of sale is printed, the cash field 25 where the amount paid by the customer is printed, and the change field 26 where the amount of change is printed. Furthermore, boundary information indicating the division of an area is printed between the breakdown area and the difference description area. Consequently, it is possible to indicate the difference field 28 as additional information and also allow the user to easily keep only the breakdown area by cutting off the difference field 28.

Fig. 8B is a diagram illustrating a second print example of a receipt in the case of tax-inclusive pricing.

As in the receipt 2a illustrated in the first example, a receipt 2b includes the title field 21, the date and time field 22, the plurality of item fields 23a and 23b, the total field 24, the cash field 25, the change field 26, and the difference field 28, which are printed on roll paper. The before-reduction field 27 is not printed. The difference field 28 of the receipt 2b also allows the customer of the store to easily grasp how much he/she benefited from the reduced tax rate system.

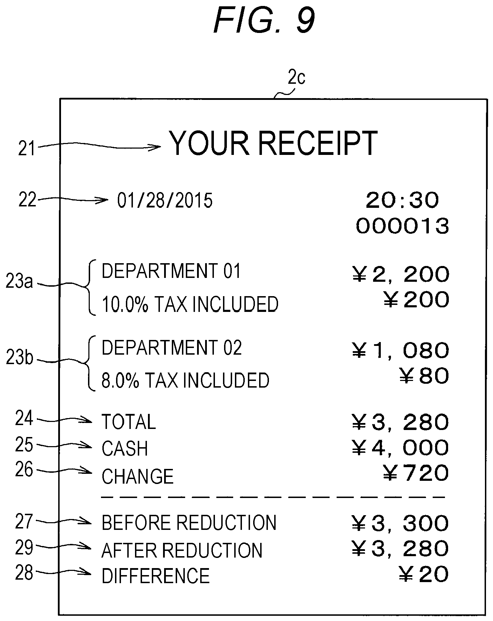

Fig. 9 is a diagram illustrating another example of a receipt in the case of tax-inclusive pricing.

As in the receipt 2a illustrated in the first example, a receipt 2c includes the title field 21, the date and time field 22, the plurality of item fields 23a and 23b, the total field 24, the cash field 25, the change field 26, the before-reduction field 27, and the difference field 28, which are printed on roll paper. Furthermore, an after-reduction field 29 is printed. The difference field 28 of the receipt 2c also allows the customer of the store to easily grasp how much he/she benefited from the reduced tax rate system. Furthermore, the before-reduction field 27 and the after-reduction field 29 allow the customer of the store to easily grasp the amounts of money according to the application and non-application of the reduced tax rate system.

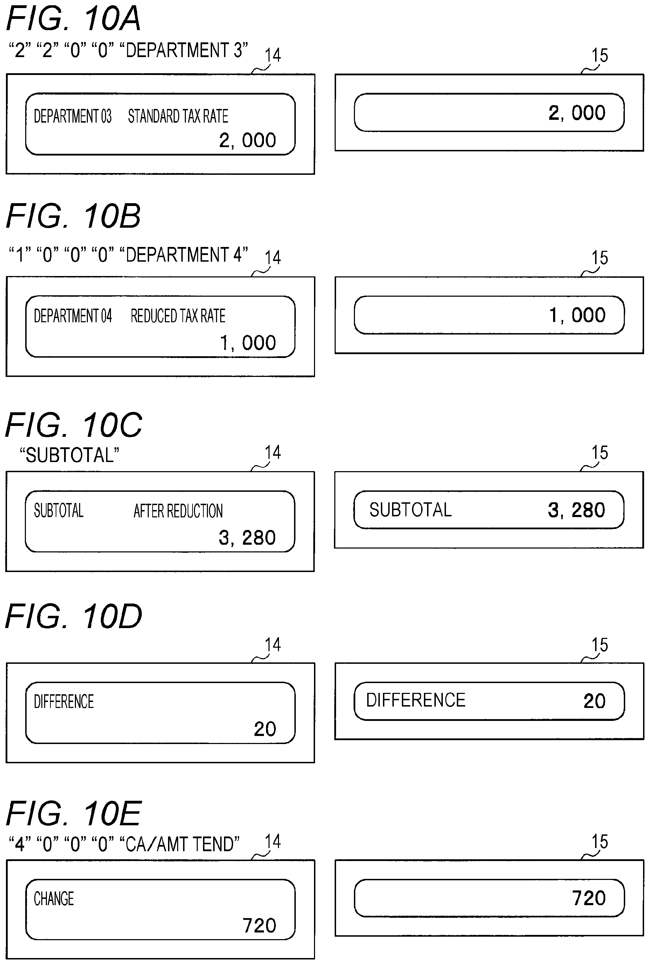

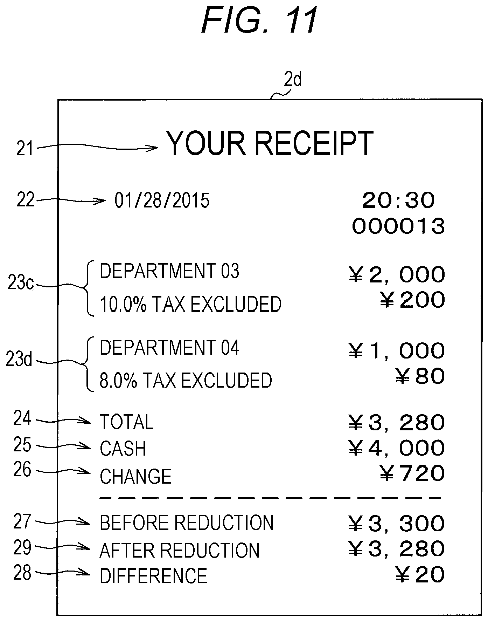

Modifications in a case of tax-exclusive pricing are described with reference to the following Figs. 10A to 10E and 11. Even with tax-exclusive pricing, the customer of the store can easily grasp how much he/she benefited from the reduced tax rate system as with the above tax-inclusive pricing.

Figs. 10A to 10E are diagrams illustrating an example of a checkout in the case of tax-exclusive pricing. Display examples of Figs. 10A to 10E illustrate an example where the operator inputs an item of 2000 yen to which the standard tax rate is applied and an item of 1000 yen to which the reduced tax rate is applied, displays a subtotal, and then receives cash of 4000 yen.

Fig. 10A illustrates display examples of the display unit 14 and the customer display unit 15 of when the operator presses "2", "0", "0", "0", and "department 3" sequentially.

"Department 03" and "standard tax rate" are displayed in the first line of the display unit 14. The amount "2,000" is displayed in the second line. The amount "2,000" is displayed on the customer display unit 15.

Fig. 10B illustrates display examples of the display unit 14 and the customer display unit 15 of when the operator presses "1", "0", "0", "0", and "department 4" sequentially.

"Department 04" and "reduced tax rate" are displayed in the first line of the display unit 14. The amount "1,000" is displayed in the second line. The amount "1,000" is displayed on the customer display unit 15.

Fig. 10C illustrates first display examples of the display unit 14 and the customer display unit 15 of when the operator presses "subtotal."

"Subtotal" and "after reduction" are displayed in the first line of the display unit 14. An amount "3,280" is displayed in the second line. The amount "3,280" is displayed on the customer display unit 15.

Fig. 10D illustrates second display examples of the display unit 14 and the customer display unit 15 of when the operator presses "subtotal."

"Difference" is displayed in the first line of the display unit 14. A difference "20" is displayed in the second line. "Difference" and the difference "20" are displayed on the customer display unit 15.

The first and second display examples are alternately displayed. Accordingly, the customer of the store can find the subtotal and the difference easily.

Fig. 10E illustrates display examples of the display unit 14 and the customer display unit 15 of when the operator presses "4", "0", "0", "0", and "ca/amt tend" sequentially.

"Change" is displayed in the first line of the display unit 14. The amount of change "720" is displayed in the second line. The amount of change "720" is displayed on the customer display unit 15. Consequently, the operator can easily see that the change is 720 yen.

Fig. 11 is a diagram illustrating a print example of a receipt in the case of tax-exclusive pricing.

A receipt 2d includes the title field 21, the date and time field 22, a plurality of item fields 23c and 23d, the total field 24, the cash field 25, and the change field 26, which are printed on roll paper.

"Your receipt" is printed in the title field 21. The date and time of a checkout is printed in the date and time field 22. The item fields 23c and 23d each include a department, an amount, and the type and amount of the consumption tax are printed below the date and time field 22. Furthermore, the total amount "¥3,280" is printed in the total field 24. The total amount is the amount after the reduction.

The amount "¥4,000" tendered by the customer is printed in the cash field 25. The amount of change "¥720" due to the customer is printed in the change field 26.

Furthermore, the before-reduction field 27, the after-reduction field 29, and the difference field 28 are printed on the receipt 2d.

An amount "¥3,300" before the reduction when all items are subject to the standard tax rate is printed in the before-reduction field 27. The total amount is printed in the after-reduction field 29. "¥20" being the difference between the pre-reduction amount and the post-reduction amount is printed in the difference field 28. Consequently, the customer of the store can easily grasp how much he/she benefited from the reduced tax rate system.

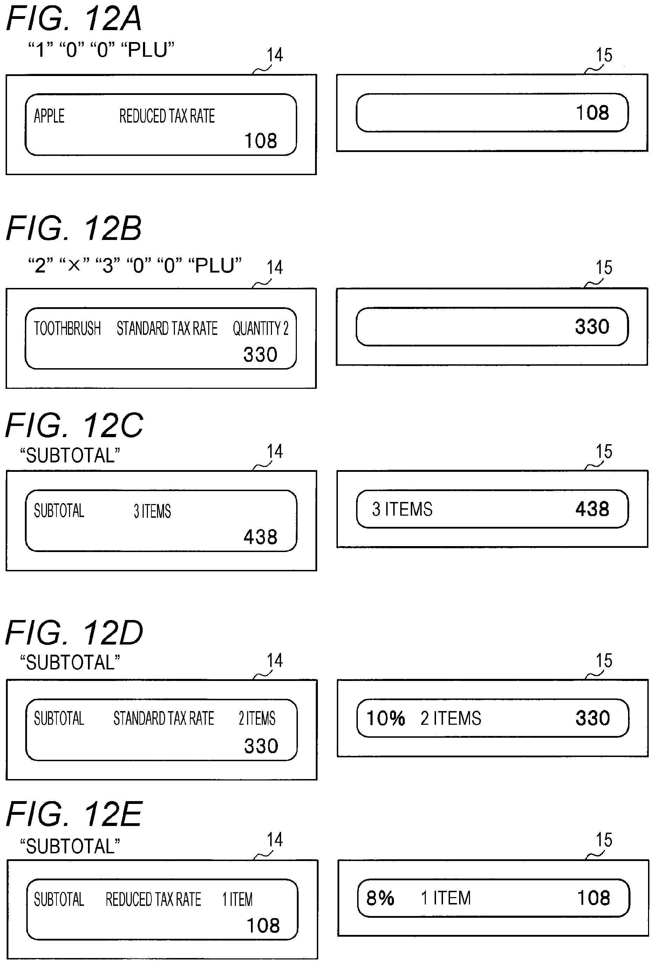

Figs. 12A to 12E are diagrams illustrating an example of a checkout with PLUs in the case of tax-inclusive pricing. Examples of Figs. 12A to 12E illustrate an example where the operator inputs an item "apple" subject to the reduced tax rate and an item name "toothbrush" subject to the standard tax rate with quantity two, and presses the "subtotal" key more than once.

Fig. 12A illustrates display examples of the display unit 14 and the customer display unit 15 of when the operator presses "1", "0", "0", and "PLU" sequentially.

The item name "apple" and "reduced tax rate" are displayed in the first line of the display unit 14. An amount "108" is displayed in the second line. The amount "108" is displayed on the customer display unit 15.

Fig. 12B illustrates display examples of the display unit 14 and the customer display unit 15 of when the operator presses "2", "x", "3", "0", "0", and "PLU" sequentially.

The item name "toothbrush" and "standard tax rate quantity 2" are displayed in the first line of the display unit 14. An amount "330" is displayed in the second line. The amount "330" is displayed on the customer display unit 15.

Fig. 12C illustrates first display examples of the display unit 14 and the customer display unit 15 of when the operator presses "subtotal" the first time.

"Subtotal" and "3 items" are displayed in the first line of the display unit 14. An amount "438" is displayed in the second line. "3 items" and the amount "438" are displayed on the customer display unit 15.

Fig. 12D illustrates second display examples of the display unit 14 and the customer display unit 15 of when the operator presses "subtotal" the second time.

"Subtotal" and "standard tax rate 2 items" are displayed in the first line of the display unit 14. A subtotal amount "330" at the standard tax rate is displayed in the second line. "10% 2 items" and the subtotal amount "330" at the standard tax rate are displayed on the customer display unit 15.

Fig. 12E illustrates third display examples of the display unit 14 and the customer display unit 15 of when the operator presses "subtotal" the third time.

"Subtotal" and "reduced tax rate 1 item" are displayed in the first line of the display unit 14. A subtotal amount "108" at the reduced tax rate is displayed in the second line. "8% 1item" and the subtotal amount "108" at the reduced tax rate are displayed on the customer display unit 15.

In this manner, a subtotal amount related to an item to which the reduced standard rate is applied and a subtotal amount related to an item to which the standard tax rate is applied are switched and displayed. Accordingly, the customer and the clerk can easily grasp these subtotal amounts.

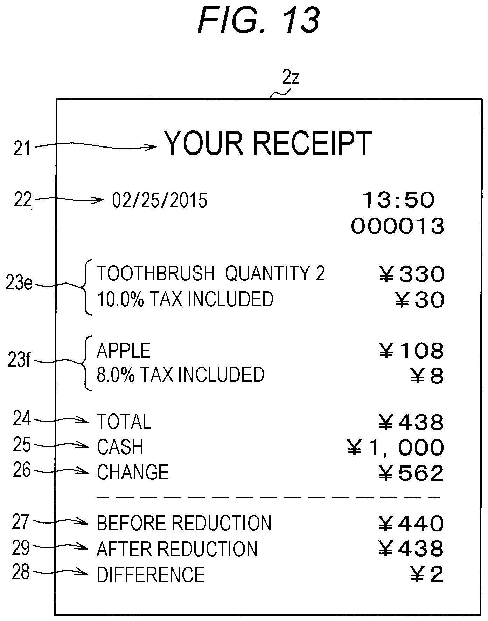

Fig. 13 is a diagram illustrating an example of a receipt for a case of input with PLU numbers.

A receipt 2z includes the title field 21, the date and time field 22, item fields 23e and 23f, the total field 24, the cash field 25, the change field 26, the before-reduction field 27, the after-reduction field 29, and the difference field 28, which are printed on roll paper. That the quantity of the item name "toothbrush" is two and they cost 330 yen including a 10% tax of 30 yen is printed in the item field 23e. That the item name "apple" cost 108 yen including an 8% tax of 8 yen is printed in the item field 23f. In this manner, the input of a PLU number enables an item name to be printed on a receipt.

The difference field 28 of the receipt 2z also allows a customer of a store to easily grasp how much he/she benefited from the reduced tax rate system. Furthermore, the before-reduction field 27 and the after-reduction field 29 allow the customer of the store to easily grasp the amounts of money according to the application and non-application of the reduced tax rate system.

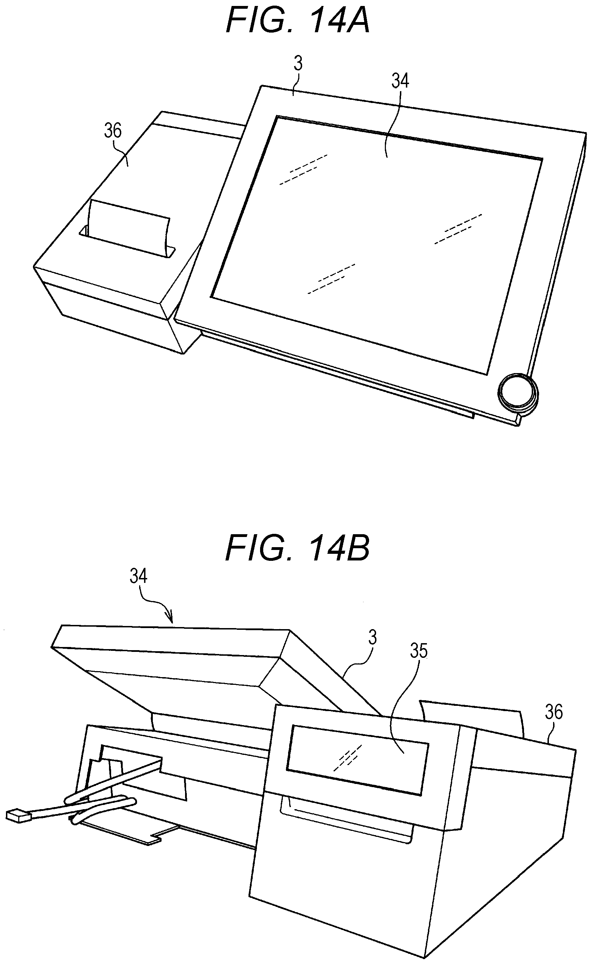

Figs. 14A and 14B are external views of an electronic cash register 3 according to a second embodiment. The electronic cash register 3 is of a compact type for small and medium stores, and can be operated by a touch panel display.

Fig. 14A is an external view of a housing when viewed diagonally from the front.

The electronic cash register 3 is configured including a touch panel display 34 serving as both an input unit and a display unit, a customer display unit 35 provided at the back of the housing (on a hidden surface), and a printing unit 36 provided on the left-hand side of the housing. A drawer is placed separated from the housing of the electronic cash register 3.

Fig. 14B is an external view of the housing when viewed diagonally from the back.

The customer display unit 35 is provided at the back of the housing of the electronic cash register 3. The customer display unit 35 is readily visible to a customer of a store when the customer stands facing a clerk across the electronic cash register 3.

An operator of the electronic cash register 3 can register items by inputting the number of items and PLUs (Price Look Up) through the touch panel display 34, displaying a subtotal, and then inputting an amount tendered. Upon item registration, the electronic cash register 3 opens an unillustrated drawer to allow the operator to put the cash tendered in it. Item registration is not limited to the input of a PLU. Item information may be read in by a barcode reader, or a button corresponding to each item may be displayed on the touch panel display 34.

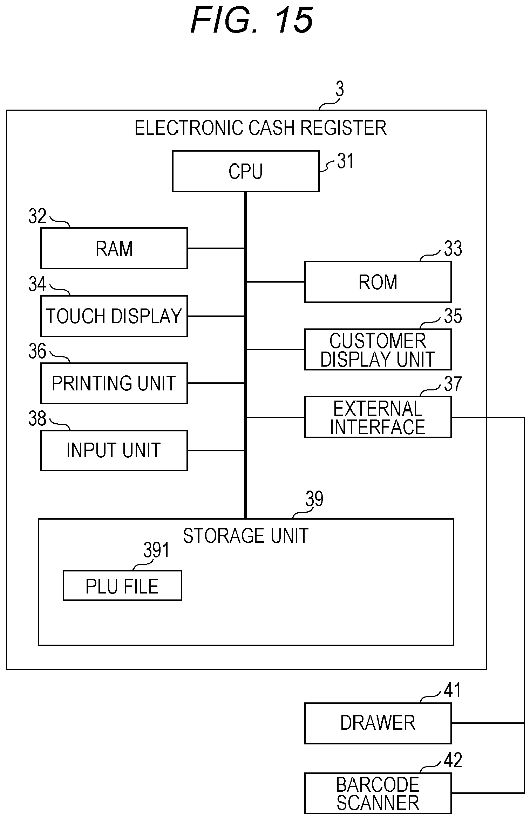

Fig. 15 is a block diagram illustrating the configuration of the electronic cash register 3.

In Fig. 15, the electronic cash register 3 includes a CPU 31, a RAM 32, a ROM 33, the touch panel display 34, the customer display unit 35, the printing unit 36, an external interface 37, an input unit 38, and a storage unit 39. Each unit is connected by a bus.

The CPU 31 develops an application program specified from various application programs for the electronic cash register 3 stored in the ROM 33 and the storage unit 39, and various instructions input from the touch panel display 34 and the input unit 38, into work memory in the RAM 32. The CPU 31 further executes various processes following the application program developed in the work memory in accordance with the input instructions and input data, and stores the process results in the work memory in the RAM 32 and also displays the process results on the touch panel display 34 and the customer display unit 35. The CPU 31 then saves the process results stored in the work memory in save destinations, which are instructed from the touch panel display 34 or the input unit 38, in the storage unit 39.

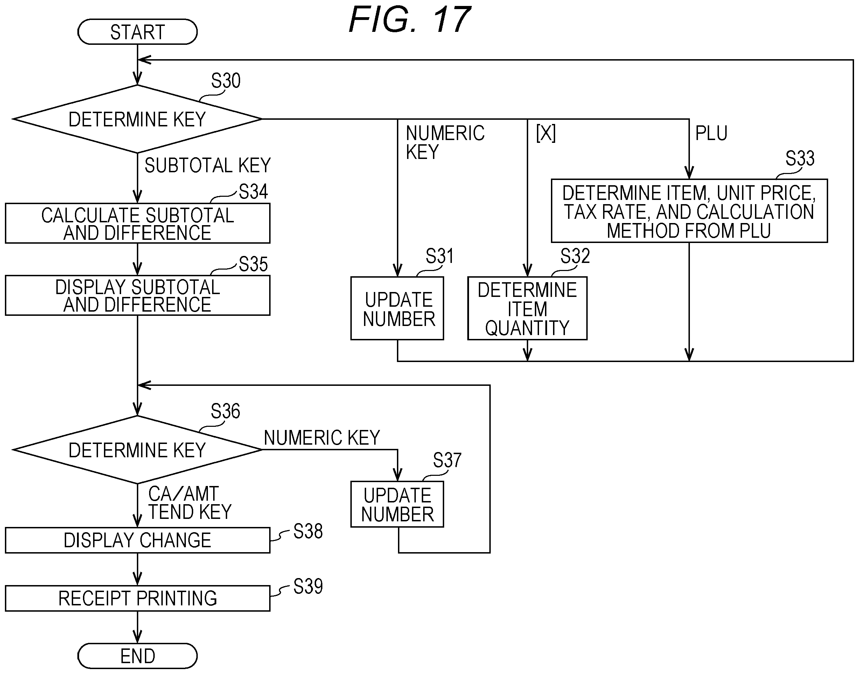

Moreover, the CPU 31 analyzes an instruction content input from the touch panel display 34 in an item registration process (see Fig. 17) described below and, if the instruction content is the specification of a PLU, searches a PLU file 391 stored in the storage unit 39, registers an item related to the applicable PLU, and calculates the tax amount and the like of the item. In a general process, the CPU 31 analyzes an instruction content input from the touch panel display 34, and executes a closing process if the instruction content is closing, or executes a process in accordance with another instruction content.

The input unit 38 is, for example, a power switch and a reset switch, and outputs a press signal indicating a press of the switch to the CPU 31.

The touch panel display 34 is a transparent touch panel stacked on a surface of a display device such as a liquid crystal display, and has both a display function and an input function. The touch panel (touchscreen) senses coordinates instructed by an input pen, fingertip, or the like, detects the position coordinates instructed on, for example, an electromagnetic induction, magnetostrictive, or pressure-sensitive coordinate reading principle, and outputs the position coordinates to the CPU 31. The CPU 31 displays, for example, various keys on the display device forming the touch panel display 34, and detects a tap in a display area of these keys on the touch panel. Consequently, the CPU 31 achieves functions such as numeric keys, a "PLU" key, and a "subtotal" key to accept the sale registration of an item or service. Moreover, the CPU 31 derives a tax amount or tax-inclusive price based on a predetermined tax rate for the item or service whose sale registration has been accepted, and outputs the tax amount or tax-inclusive price on the touch panel display 34.

An "x" key materialized on the touch panel display 34 is used for multiplication registration, and also used to display the date and time. Numeric keys such as "9" to "0", "00", and "●" are used to input a numeric value. The "subtotal" key is used to see the total (intermediate total) of the registered amounts. A "ca/amt tend" key is used to complete the registration and for cash tendered. The "PLU" key is used to specify an item with a PLU number.

The customer display unit 35 includes, for example, a liquid crystal display or organic EL display, and supports display in Chinese characters, Hiragana, and Katakana. The CPU 31 derives a tax amount or tax-inclusive price based on a predetermined tax rate for an item or service whose sale registration has been accepted, and outputs the tax amount or tax-inclusive price on the customer display unit 35.

The printing unit 36 is, for example, a heat transfer printer, and prints out receipt information on roll paper (receipt paper). At the instruction of the CPU 31, the printing unit 36 outputs, on a receipt, the difference between the tax amount of an item or service to which the reduced tax rate is applied, and the tax amount of when the standard tax rate is applied to the item or service based on the price and tax rate of the item or service.

The external interface 37 is for connecting, for example, a drawer 41 and a barcode scanner 42.

The drawer 41 is a portion where cash is stored, and can be opened by the operator operating the electronic cash register 3. The barcode scanner 42 is a portion that reads a barcode on an item by the operator's operation.

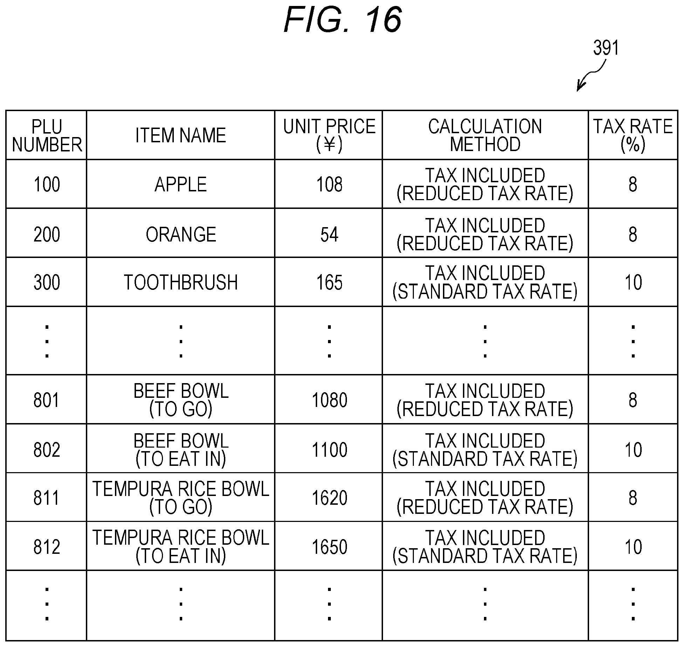

The storage unit 39 includes a rewritable storage medium such as a magnetic or optical storage medium, or a semiconductor memory. The storage unit 39 stores a system program and various application programs for the system, data processed by these programs, and the like, in addition to the PLU file 391. The PLU file 391 is described in detail in Fig. 16 described below.

The CPU 31 refers to the PLU file 391 to determine which of the reduced tax rate and the standard tax rate is applied to each item or service.

Moreover, it may be configured such that all or part of the programs, the data, and the like to be stored in the storage unit 39 are received from another apparatus such as a server or client via a transmission medium such as a network line, and are stored. Furthermore, the storage unit 39 may be a recording medium of a server constructed on a network. Furthermore, it may be configured such that each program is transferred to a server and a client via a transmission medium such as a network line, and installed in these apparatuses.

Fig. 16 is a diagram describing the PLU file 391.

The PLU file 391 is configured including a PLU number field, an item name field, a unit price field, a calculation method field, and a tax rate field, as in the PLU file 192 (see Fig. 4) of the first embodiment. Consequently, it is possible to indicate a correspondence between a PLU number and an item/unit price/calculation method/tax rate.

An item code related to the item is stored in the PLU number field. An item name related to the item is stored in the item name field. A unit price calculated by a tax calculation method applicable to the item is stored in the unit price field. A tax amount calculation method applicable to the item is stored in the calculation method field. For example, if "tax included (standard tax rate)" or "tax included (reduced tax rate)" is stored in the calculation method field, a tax-inclusive unit price is stored in the unit price field. If "tax excluded (standard tax rate)" or "tax excluded (reduced tax rate)" is stored in the calculation method field, a tax-exclusive unit price is stored in the unit price field. A tax rate for the item is stored in the unit of percentage in the tax rate field.

Fig. 17 is a flowchart illustrating the item registration process.

The CPU 31 of the electronic cash register 3 repeats processing of steps S30 to S39 on a transaction-per-customer basis. Moreover, whenever the operator registers an item, the CPU 31 repeats the processing of steps S30 to S33.

The CPU 31 determines which of the keys displayed on the touch panel display 34 has been input (step S30).

If the numeric key has been tapped on the touch panel display 34 in step S30, the CPU 31 updates the number on the touch panel display 34 and the customer display unit 35 (step S31), and returns to the processing of step S30.

If the "x" key has been tapped on the touch panel display 34 in step S30, the CPU 31 proceeds to step S32 of determining the number on the touch panel display 34 and the customer display unit 35 as an item quantity, and returns to the processing of step S30. Specifically, when the operator inputs an item quantity, it is simply required to tap the numeric key on the touch panel display 34 to input the item quantity, and then tap the "x" key.

If the "PLU" key has been tapped on the touch panel display 34 in step S30, the CPU 31 proceeds to step S33 of determining an item, a unit price, a tax rate, and a calculation method using the number on the touch panel display 34 and the customer display unit 35 as a PLU number, and then returns to the processing of step S30. Specifically, when the operator specifies an item with a PLU number, it is simply required to input a PLU number with the numeric keys on the touch panel display 34 and then tap the "PLU" key.

If the "subtotal" key has been tapped on the touch panel display 34 in step S30, the CPU 31 calculates a subtotal and a difference (step S34). The difference here indicates a difference between a standard tax amount and a reduced tax amount. The CPU 31 displays the subtotal and the difference on the touch panel display 34 and the customer display unit 35 (step S35). In other words, if an item whose sale registration has been accepted is an item to which the reduced tax rate (first tax rate) is applied, the CPU 31 derives a difference between a tax amount of when the reduced tax rate is applied to the item and a tax amount of when the standard tax rate (second tax rate) is applied to the item, and also outputs the derived difference to the touch panel display 34 and the customer display unit 35.

Furthermore, if an item whose sale registration has been accepted is an item to which the reduced tax rate (first tax rate) is applied, the CPU 31 outputs the difference as reduced amount information. If the item whose sale registration has been accepted is an item to which the standard tax rate (second tax rate) is applied, the CPU 31 outputs the difference as increased amount information to the touch panel display 34 and the customer display unit 35.

If the numeric key has been tapped on the touch panel display 34 (step S36), the CPU 31 updates the number on the touch panel display 34 and the customer display unit 35 (step S37), and returns to the processing of step S36.

If the "ca/amt tend" key has been tapped on the touch panel display 34 in step S36, the CPU 31 calculates and displays a change (Step S38), causes the printing unit 36 to print a receipt (step S39), and ends the processing of Fig. 17.

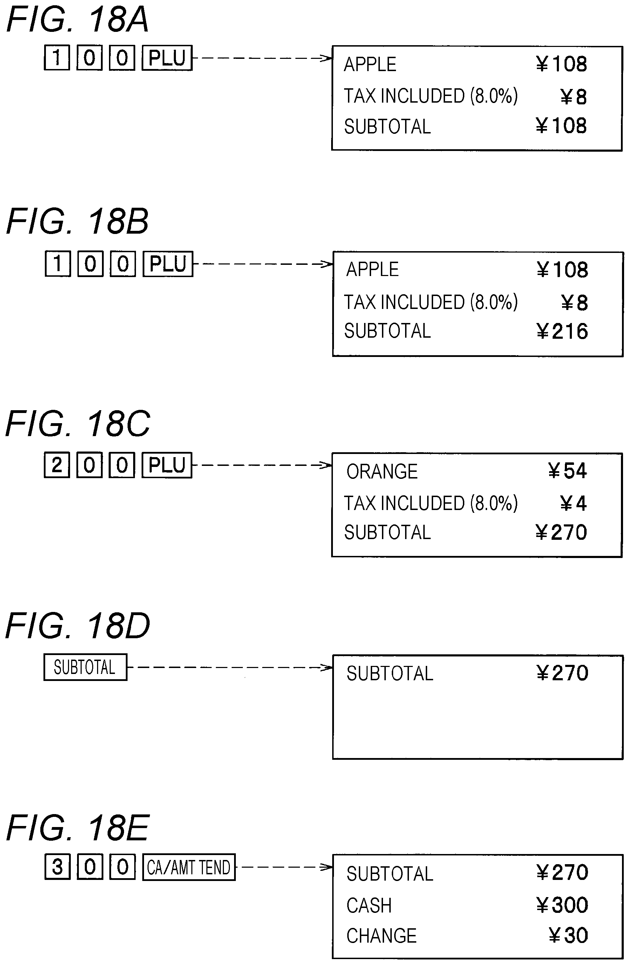

Figs. 18A to 18E are diagrams illustrating operations and displays of when two apples and an orange are registered as items, including tax, in a case where the customer display unit 35 can display three lines.

Fig. 18A illustrates the display of the customer display unit 35 of when first the numeric keys "1", "0", and "0" and then the "PLU" key are tapped on the touch panel display 34.

An item name "apple" and a tax-inclusive unit price "¥108" are displayed in the first line of the customer display unit 35. "Tax included (8.0%)" and a tax amount "¥8" are displayed in the second line. Furthermore, "subtotal" and the current subtotal amount "¥108" are displayed in the third line.

Fig. 18B illustrates the display of the customer display unit 35 of when first the numeric keys "1", "0", and "0" and then the "PLU" key are tapped on the touch panel display 34 in Fig. 18A.

The item name "apple" and the tax-inclusive unit price "¥108" are displayed in the first line of the customer display unit 35. "Tax included (8.0%)" and the tax amount "¥8" are displayed in the second line. Furthermore, "subtotal" and the current subtotal amount "¥216" are displayed in the third line.

Fig. 18C illustrates the display of the customer display unit 35 of when first the numeric keys "2", "0", and "0" and then the "PLU" key are tapped on the touch panel display 34 in Fig. 18B.

An item name "orange" and a tax-inclusive unit price "¥54" are displayed in the first line of the customer display unit 35. "Tax included (8.0%)" and a tax amount "¥4" are displayed in the second line. Furthermore, "subtotal" and the current subtotal amount "¥270" are displayed in the third line.

Fig. 18D illustrates the display of the customer display unit 35 of when the "subtotal" key is tapped on the touch panel display 34 in Fig. 18C.

"Subtotal" and the current subtotal amount "¥270" are displayed in the first line of the customer display unit 35. The customer pays the clerk 300 yen at this point in time.

Fig. 18E illustrates the display of the customer display unit 35 of when first the numeric keys "3, "0", and "0" and then the "ca/amt tend" key are tapped on the touch panel display 34 in Fig. 18D.

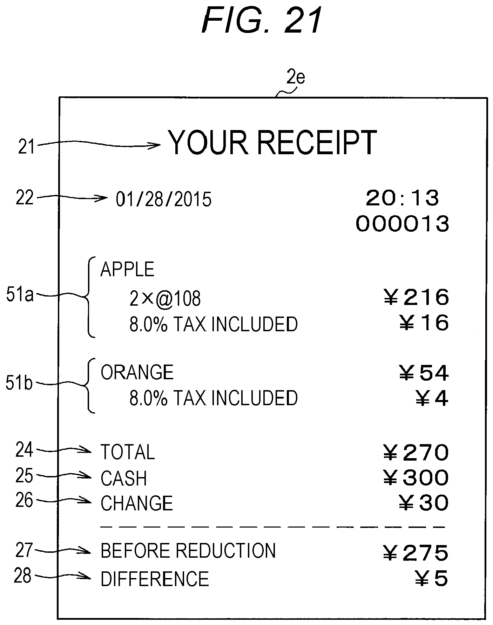

"Subtotal" and the current subtotal amount "¥270" are displayed in the first line of the customer display unit 35. "Cash" and the amount tendered "¥300" are displayed in the second line. Furthermore, "change" and the amount of change "¥30" are displayed in the third line. With this operation, the transaction is closed to issue a receipt 2e illustrated in Fig. 21.

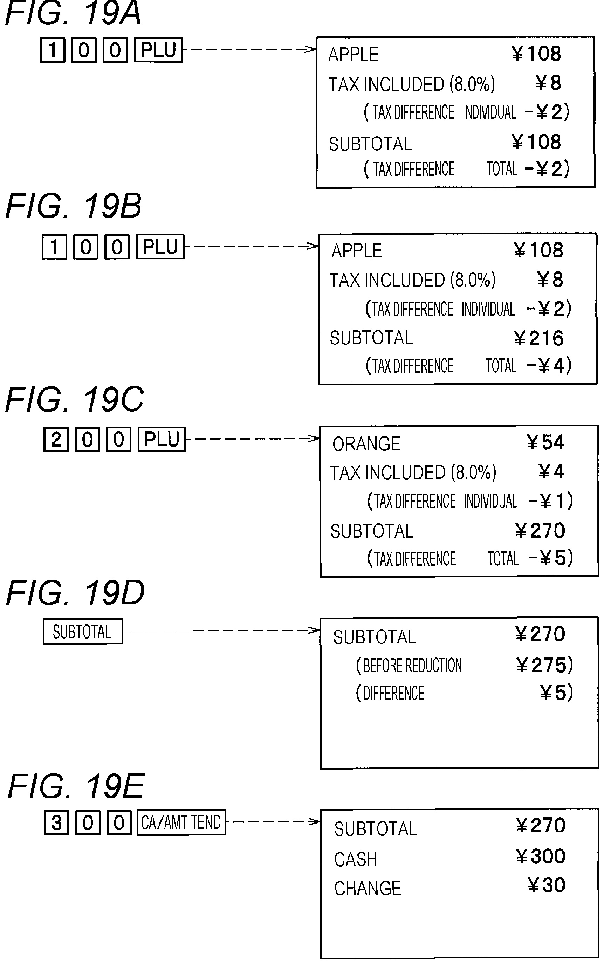

Figs. 19A to 19E are diagrams illustrating operations and displays of when two apples and an orange are registered as items, including tax, in a case where the customer display unit 35 can display multiple lines.

Fig. 19A illustrates the display of the customer display unit 35 of when first the numeric keys "1", "0", and "0" and then the "PLU" key are tapped on the touch panel display 34.

The item name "apple" and the tax-inclusive unit price "¥108" are displayed in the first line of the customer display unit 35. "Tax included (8.0%)" and the tax amount "¥8" are displayed in the second line. "Tax difference" and "individual," and a tax difference "-¥2" in this item are displayed inside parentheses in the third line. The tax difference allows the customer of the store to easily grasp how much he/she benefited in this item.

Furthermore, "subtotal" and the current subtotal amount "¥108" are displayed in the fourth line. "Tax difference" and "total," and a tax difference "-¥2" in the subtotal are displayed inside parentheses in the fifth line. The tax difference allows the customer of the store to easily grasp how much he/she benefited in this transaction.

Fig. 19B illustrates the display of the customer display unit 35 of when first the numeric keys "1", "0", and "0" and then the "PLU" key are tapped on the touch panel display 34 in Fig. 19A.

The item name "apple" and the tax-inclusive unit price "¥108" are displayed in the first line of the customer display unit 35. "Tax included (8.0%)" and the tax amount "¥8" are displayed in the second line. "Tax difference" and "individual," and the tax difference "-¥2" in this item are displayed inside parentheses in the third line. Furthermore, "subtotal" and the current subtotal amount "¥216" are displayed in the fourth line. "Tax difference" and "total," and a tax difference "-¥4" in the subtotal are displayed inside parentheses in the fifth line.

Fig. 19C illustrates the display of the customer display unit 35 of when first the numeric keys "2", "0", and "0" and then the "PLU" key are tapped on the touch panel display 34 in Fig. 19B.

The item name "orange" and the tax-inclusive unit price "¥54" are displayed in the first line of the customer display unit 35. "Tax included (8.0%)" and the tax amount "¥4" are displayed in the second line. "Tax difference" and "individual," and a tax difference "-¥1" in this item are displayed inside parentheses in the third line. Furthermore, "subtotal" and the current subtotal amount "¥270" are displayed in the fourth line. "Tax difference" and "total," and a tax difference "-¥5" in the subtotal are displayed inside parentheses in the fifth line.

Fig. 19D illustrates the display of the customer display unit 35 of when the "subtotal" key is tapped on the touch panel display 34 in Fig. 19C.

"Subtotal" and the current subtotal amount "¥270" are displayed in the first line of the customer display unit 35. "Before reduction" and a pre-reduction subtotal amount "¥275" are displayed inside parenthesis in the second line. "Difference" and a difference "¥5" in the subtotal are displayed inside parentheses in the third line. The customer pays the clerk 300 yen at this point in time.

Fig. 19E illustrates the display of the customer display unit 35 of when first the numeric keys "3, "0", and "0" and then the "ca/amt tend" key are tapped on the touch panel display 34 in Fig. 19D.

"Subtotal" and the current subtotal amount "¥270" are displayed in the first line of the customer display unit 35. "Cash" and the amount tendered "¥300" are displayed in the second line. Furthermore, "change" and the amount of change "¥30" are displayed in the third line. With this operation, the transaction is closed to issue the receipt 2e illustrated in Fig. 21.

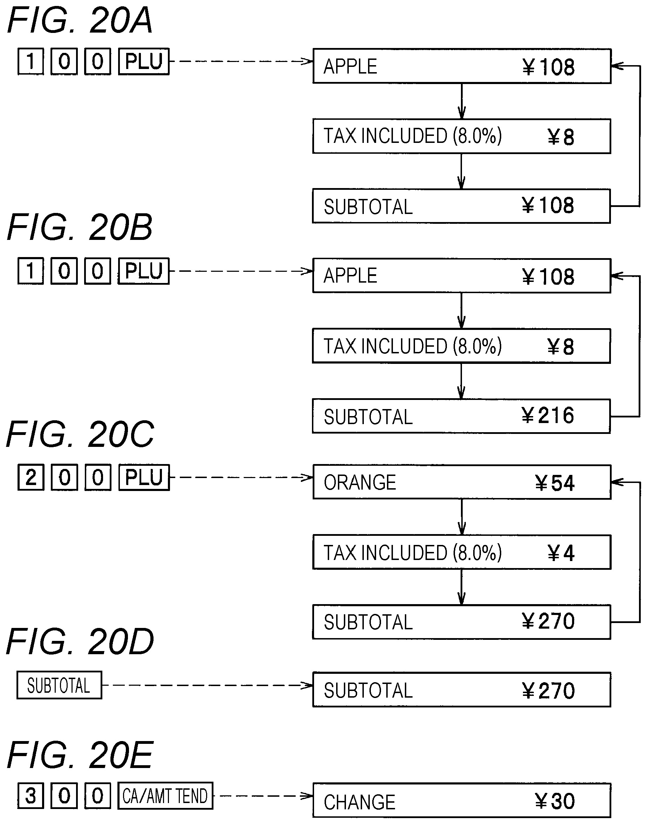

Figs. 20A to 20E are diagrams illustrating operations and displays of when two apples and an orange are registered as items, including tax, in a case where the customer display unit 35 can display only one line.

Fig. 20A illustrates the display of the customer display unit 35 of when first the numeric keys "1", "0", and "0" and then the "PLU" key are tapped on the touch panel display 34.

Firstly, the item name "apple" and the tax-inclusive unit price "¥108" are displayed on the customer display unit 35. "Tax included (8.0%)" and the tax amount "¥8" are displayed after a lapse of a predetermined time. "Subtotal" and the current subtotal amount "¥108" are displayed after the lapse of the predetermined time. The first display is back again after the lapse of another predetermined time. The above information may be repeatedly displayed by horizontal scrolling instead of the repeated switching of the screen display.

Fig. 20B illustrates the display of the customer display unit 35 of when first the numeric keys "1", "0", and "0" and then the "PLU" key are tapped on the touch panel display 34 in Fig. 20A.

Firstly, the item name "apple" and the tax-inclusive unit price "¥108" are displayed on the customer display unit 35. "Tax included (8.0%)" and the tax amount "¥8" are displayed after the lapse of the predetermined time. "Subtotal" and the current subtotal amount "¥216" are displayed after the lapse of the predetermined time. The first display is back again after the lapse of another predetermined time.

Fig. 20C illustrates the display of the customer display unit 35 of when first the numeric keys "2", "0", and "0" and then the "PLU" key are tapped on the touch panel display 34 in Fig. 20B.

Firstly, the item name "orange" and the tax-inclusive unit price "¥54" are displayed on the customer display unit 35. "Tax included (8.0%)" and the tax amount "¥4" are displayed after the lapse of the predetermined time. "Subtotal" and the current subtotal amount "¥270" are displayed after the lapse of the predetermined time. The first display is back again after the lapse of another predetermined time.

Fig. 20D illustrates the display of the customer display unit 35 of when the "subtotal" key is tapped on the touch panel display 34 in Fig. 20C.

"Subtotal" and the current subtotal amount "¥270" are displayed on the customer display unit 35. The customer pays the clerk 300 yen at this point in time.

Fig. 20E illustrates the display of the customer display unit 35 of when first the numeric keys "3, "0", and "0" and then the "ca/amt tend" key are tapped on the touch panel display 34 in Fig. 20D.

"Change" and the amount of change "¥30" are displayed on the customer display unit 35. With this operation, the transaction is closed to issue the receipt 2e illustrated in Fig. 21.

Fig. 21 is a diagram illustrating the receipt 2e of when two apples and an orange have been registered as items, including tax.

The receipt 2e includes the title field 21, the date and time field 22, item fields 51a and 51b, the total field 24, the cash field 25, and the change field 26, the before-reduction field 27, and the difference field 28, which are printed on roll paper. That the quantity of the item name "apple" is two, and they cost 108 yen each and 216 yen in total, including an 8.0% tax of 16 yen, is printed in the item field 51a. That the unit price of the item name "orange" is 54 yen, including an 8.0% tax of 4 yen, is printed in the item field 51b.

The amount "¥275" before the reduction when all items are subject to the standard tax rate is printed in the before-reduction field 27. "¥5" being the difference between the pre-reduction amount and the post-reduction amount is printed in the difference field 28. The difference field 28 of the receipt 2e also allows the customer of the store to easily grasp how much he/she benefited from the reduced tax rate system.

A difference description area where the before-reduction field 27 and the difference field 28 are printed is printed below a breakdown area including the total field 24 where the amount of sale is printed, the cash field 25 where the amount paid by the customer is printed, and the change field 26 where the amount of change is printed. Furthermore, boundary information indicating the division of an area is printed between the breakdown area and the difference description area. Consequently, it is possible to indicate the before-reduction field 27 and the difference field 28 as additional information and also allow the user to easily keep only the breakdown area by cutting off the before-reduction field 27 and the difference field 28.

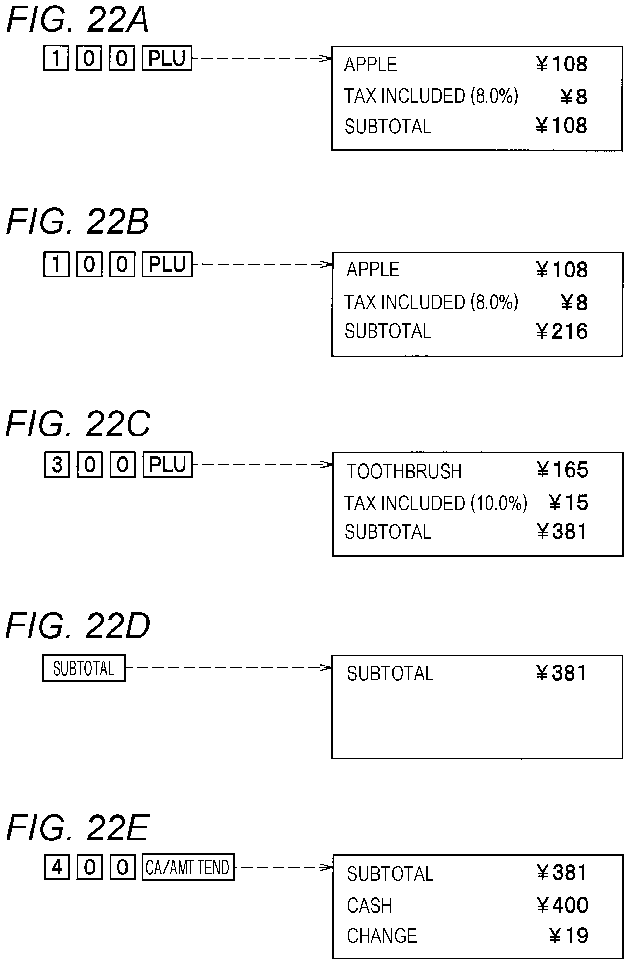

Figs. 22A to 22E are diagrams illustrating operations and displays of when two apples and a toothbrush are registered as items, including tax, in the case where the customer display unit 35 can display three lines.

Fig. 22A illustrates the display of the customer display unit 35 of when first the numeric keys "1", "0", and "0" and then the "PLU" key are tapped on the touch panel display 34.

The item name "apple" and the tax-inclusive unit price "¥108" are displayed in the first line of the customer display unit 35. "Tax included (8.0%)" and the tax amount "¥8" are displayed in the second line. Furthermore, "subtotal" and the current subtotal amount "¥108" are displayed in the third line.

Fig. 22B illustrates the display of the customer display unit 35 of when first the numeric keys "1", "0", and "0" and then the "PLU" key are tapped on the touch panel display 34 in Fig. 22A.

The item name "apple" and the tax-inclusive unit price "¥108" are displayed in the first line of the customer display unit 35. "Tax included (8.0%)" and the tax amount "¥8" are displayed in the second line. Furthermore, "subtotal" and the current subtotal amount "¥216" are displayed in the third line.

Fig. 22C illustrates the display of the customer display unit 35 of when first the numeric keys "3", "0", and "0" and then the "PLU" key are tapped on the touch panel display 34 in Fig. 22B.

An item name "toothbrush" and a tax-inclusive unit price "¥165" are displayed in the first line of the customer display unit 35. "Tax included (10.0%)" and a tax amount "¥15" are displayed in the second line. Furthermore, "subtotal" and the current subtotal amount "¥381" are displayed in the third line.

Fig. 22D illustrates the display of the customer display unit 35 of when the "subtotal" key is tapped on the touch panel display 34 in Fig. 22C.

"Subtotal" and the current subtotal amount "¥381" are displayed in the first line of the customer display unit 35. The customer pays the clerk 400 yen at this point in time.

Fig. 22E illustrates the display of the customer display unit 35 of when first the numeric keys "4", "0", and "0" and then the "ca/amt tend" key are tapped on the touch panel display 34 in Fig. 22D.

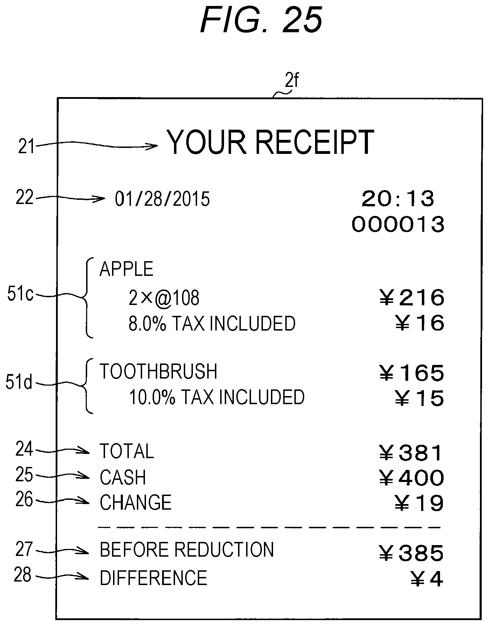

"Subtotal" and the current subtotal amount "¥381" are displayed in the first line of the customer display unit 35. "Cash" and the amount tendered "¥400" are displayed in the second line. Furthermore, "change" and the amount of change "¥19" are displayed in the third line. With this operation, the transaction is closed to issue a receipt 2f illustrated in Fig. 25.

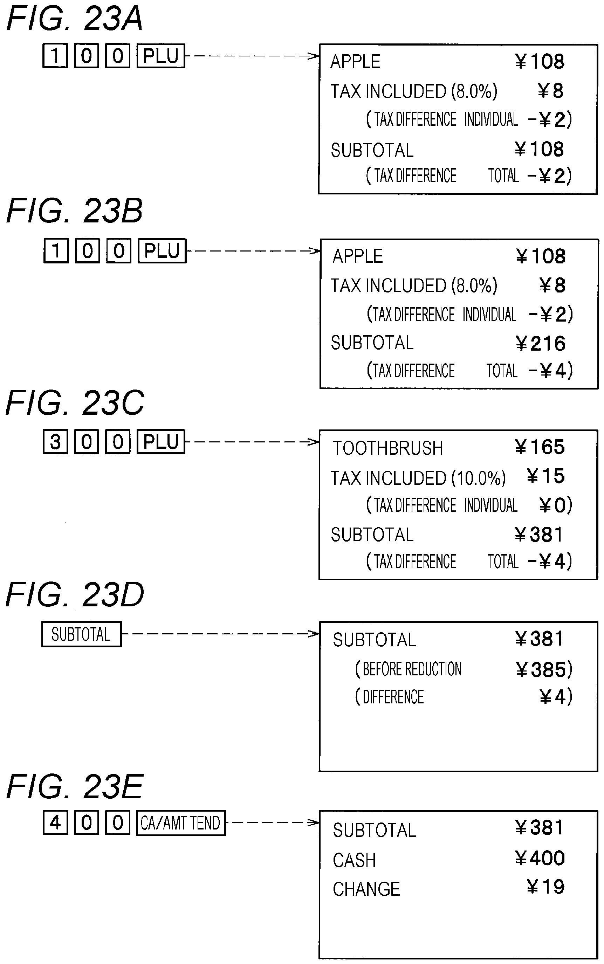

Figs. 23A to 23E are diagrams illustrating operations and displays of when two apples and a toothbrush are registered as items, including tax, in the case where the customer display unit 35 can display multiple lines.

Fig. 23A illustrates the display of the customer display unit 35 of when first the numeric keys "1", "0", and "0" and then the "PLU" key are tapped on the touch panel display 34.

The item name "apple" and the tax-inclusive unit price "¥108" are displayed in the first line of the customer display unit 35. "Tax included (8.0%)" and the tax amount "¥8" are displayed in the second line. "Tax difference" and "individual," and the tax difference "-¥2" in this item are displayed inside parentheses in the third line. The tax difference allows the customer of the store to easily grasp how much he/she benefited in this item.

Furthermore, "subtotal" and the current subtotal amount "¥108" are displayed in the fourth line. "Tax difference" and "total," and the tax difference "-¥2" in the subtotal are displayed inside parentheses in the fifth line. The tax difference allows the customer of the store to easily grasp how much he/she benefited in this transaction.

Fig. 23B illustrates the display of the customer display unit 35 of when first the numeric keys "1", "0", and "0" and then the "PLU" key are tapped on the touch panel display 34 in Fig. 23A.

The item name "apple" and the tax-inclusive unit price "¥108" are displayed in the first line of the customer display unit 35. "Tax included (8.0%)" and the tax amount "¥8" are displayed in the second line. "Tax difference" and "individual," and the tax difference "-¥2" in this item are displayed inside parentheses in the third line. Furthermore, "subtotal" and the current subtotal amount "¥216" are displayed in the fourth line. "Tax difference" and "total," and the tax difference "-¥4" in the subtotal are displayed inside parentheses in the fifth line.

Fig. 23C illustrates the display of the customer display unit 35 of when first the numeric keys "3", "0", and "0" and then the "PLU" key are tapped on the touch panel display 34 in Fig. 23B.

The item name "toothbrush" and the tax-inclusive unit price "¥165" are displayed in the first line of the customer display unit 35. "Tax included (10.0%)" and the tax amount "¥15" are displayed in the second line. "Tax difference" and "individual," and a tax difference "¥0" in this item are displayed inside parentheses in the third line. Furthermore, "subtotal" and the current subtotal amount "¥381" are displayed in the fourth line. "Tax difference" and "total," and the tax difference "-¥4" in the subtotal are displayed inside parentheses in the fifth line.

Fig. 23D illustrates the display of the customer display unit 35 of when the "subtotal" key is tapped on the touch panel display 34 in Fig. 23C.

"Subtotal" and the current subtotal amount "¥381" are displayed in the first line of the customer display unit 35. "Before reduction" and the pre-reduction subtotal amount "¥385" are displayed inside parenthesis in the second line. "Difference" and the difference "¥4" in the subtotal are displayed inside parentheses in the third line. The customer pays the clerk 400 yen at this point in time.

Fig. 23E illustrates the display of the customer display unit 35 of when first the numeric keys "4", "0", and "0" and then the "ca/amt tend" key are tapped on the touch panel display 34 in Fig. 23D.

"Subtotal" and the current subtotal amount "¥381" are displayed in the first line of the customer display unit 35. "Cash" and the amount tendered "¥400" are displayed in the second line. Furthermore, "change" and the amount of change "¥19" are displayed in the third line. With this operation, the transaction is closed to issue the receipt 2f illustrated in Fig. 25.

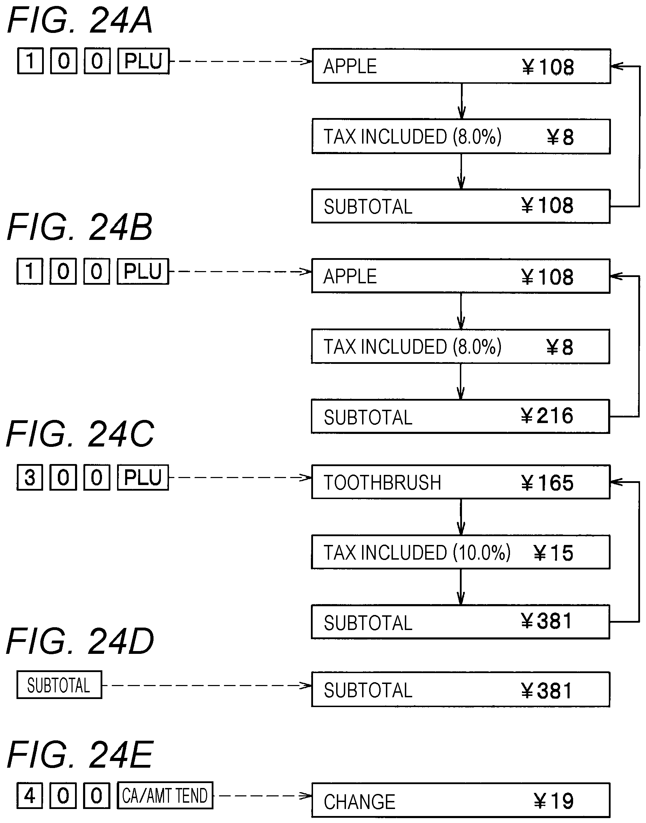

Figs. 24A to 24E are diagrams illustrating operations and displays of when apples and a toothbrush are registered as items, including tax, in the case where the customer display unit 35 can display only one line.

Fig. 24A illustrates the display of the customer display unit 35 of when first the numeric keys "1", "0", and "0" and then the "PLU" key are tapped on the touch panel display 34.

Firstly, the item name "apple" and the tax-inclusive unit price "¥108" are displayed on the customer display unit 35. "Tax included (8.0%)" and the tax amount "¥8" are displayed after a lapse of a predetermined time. "Subtotal" and the current subtotal amount "¥108" are displayed after the lapse of the predetermined time. The first display is back again after the lapse of another predetermined time.

Fig. 24B illustrates the display of the customer display unit 35 of when first the numeric keys "1", "0", and "0" and then the "PLU" key are tapped on the touch panel display 34 in Fig. 24A.

Firstly, the item name "apple" and the tax-inclusive unit price "¥108" are displayed on the customer display unit 35. "Tax included (8.0%)" and the tax amount "¥8" are displayed after the lapse of the predetermined time. "Subtotal" and the current subtotal amount "¥216" are displayed after the lapse of the predetermined time. The first display is back again after the lapse of another predetermined time.

Fig. 24C illustrates the display of the customer display unit 35 of when first the numeric keys "3", "0", and "0" and then the "PLU" key are tapped on the touch panel display 34 in Fig. 24B.

Firstly, the item name "toothbrush" and the tax-inclusive unit price "¥165" are displayed on the customer display unit 35. "Tax included (10.0%)" and the tax amount "¥15" are displayed after the lapse of the predetermined time. "Subtotal" and the current subtotal amount "¥381" are displayed after the lapse of the predetermined time. The first display is back again after the lapse of another predetermined time.

Fig. 24D illustrates the display of the customer display unit 35 of when the "subtotal" key is tapped on the touch panel display 34 in Fig. 24C.

"Subtotal" and the current subtotal amount "¥381" are displayed on the customer display unit 35. The customer pays the clerk 400 yen at this point in time.

Fig. 24E illustrates the display of the customer display unit 35 of when first the numeric keys "4", "0", and "0" and then the "ca/amt tend" key are tapped on the touch panel display 34 in Fig. 24D.

"Change" and the amount of change "¥19" are displayed on the customer display unit 35. With this operation, the transaction is closed to issue the receipt 2f illustrated in Fig. 25.

Fig. 25 is a diagram illustrating the receipt 2f of when two apples and a toothbrush have been registered as items, including tax.

The receipt 2f includes the title field 21, the date and time field 22, item fields 51c and 51d, the total field 24, the cash field 25, and the change field 26, the before-reduction field 27, and the difference field 28, which are printed on roll paper. That the quantity of the item name "apple" is two, and they cost 108 yen each and 216 yen in total, including an 8% tax of 16 yen, is printed in the item field 51 c. That the unit price of the item name "toothbrush" is 165 yen, including a 10% tax of 15 yen, is printed in the item field 51d.

The amount "¥385" before the reduction when all items are subject to the standard tax rate is printed in the before-reduction field 27. "¥4" being the difference between the pre-reduction amount and the post-reduction amount is printed in the difference field 28. The difference field 28 of the receipt 2f also allows the customer of the store to easily grasp how much he/she benefited from the reduced tax rate system.

A difference description area where the before-reduction field 27 and the difference field 28 are printed is printed below a breakdown area including the total field 24 where the amount of sale is printed, the cash field 25 where the amount paid by the customer is printed, and the change field 26 where the amount of change is printed. Furthermore, boundary information indicating the division of an area is printed between the breakdown area and the difference description area. Consequently, it is possible to indicate the before-reduction field 27 and the difference field 28 as additional information and also allow the user to easily keep only the breakdown area by cutting off the before-reduction field 27 and the difference field 28.

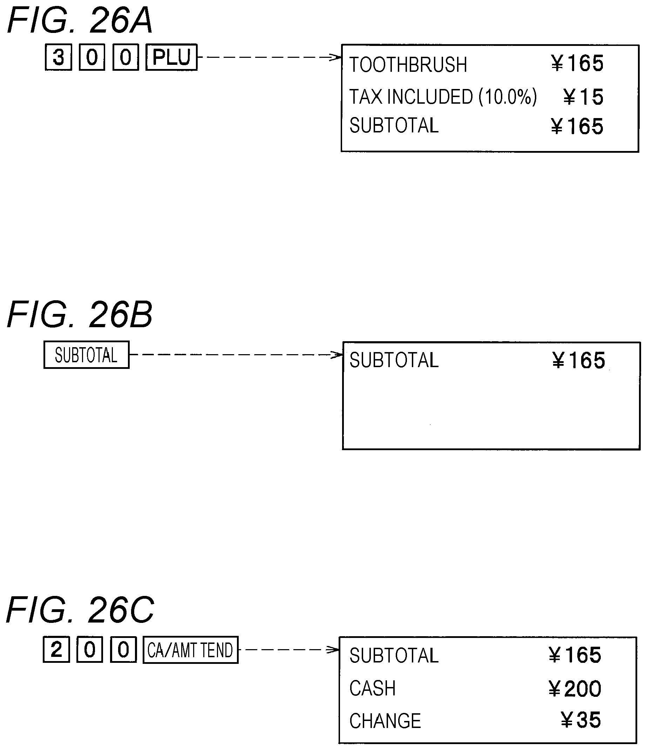

Figs. 26A to 26C are diagrams illustrating operations and displays of when a toothbrush is registered as an item, including tax, in the case where the customer display unit 35 can display three lines.

Fig. 26A illustrates the display of the customer display unit 35 of when first the numeric keys "3", "0", and "0" and then the "PLU" key are tapped on the touch panel display 34.

The item name "toothbrush" and the tax-inclusive unit price "¥165" are displayed in the first line of the customer display unit 35. "Tax included (10.0%)" and the tax amount "¥15" are displayed in the second line. Furthermore, "subtotal" and the current subtotal amount "¥165" are displayed in the third line.

Fig. 26B illustrates the display of the customer display unit 35 of when the "subtotal" key is tapped on the touch panel display 34 in Fig. 26A.

"Subtotal" and the current subtotal amount "¥165" are displayed in the first line of the customer display unit 35. The customer pays the clerk 200 yen at this point in time.

Fig. 26C illustrates the display of the customer display unit 35 of when first the numeric keys "2", "0", and "0" and then the "ca/amt tend" key are tapped on the touch panel display 34 in Fig. 26B.

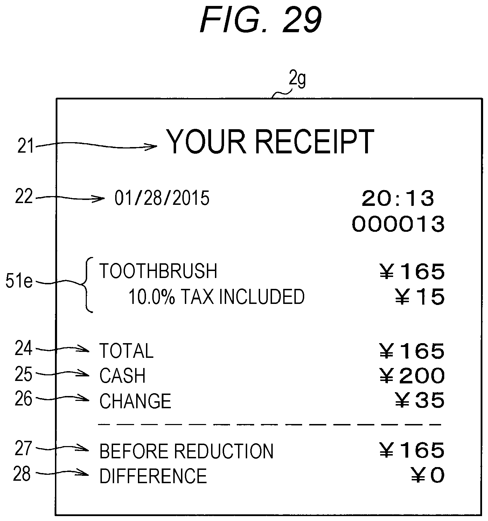

"Subtotal" and the current subtotal amount "¥165" are displayed in the first line of the customer display unit 35. "Cash" and the amount tendered "¥200" are displayed in the second line. Furthermore, "change" and the amount of change "¥35" are displayed in the third line. With this operation, the transaction is closed to issue a receipt 2g illustrated in Fig. 29.

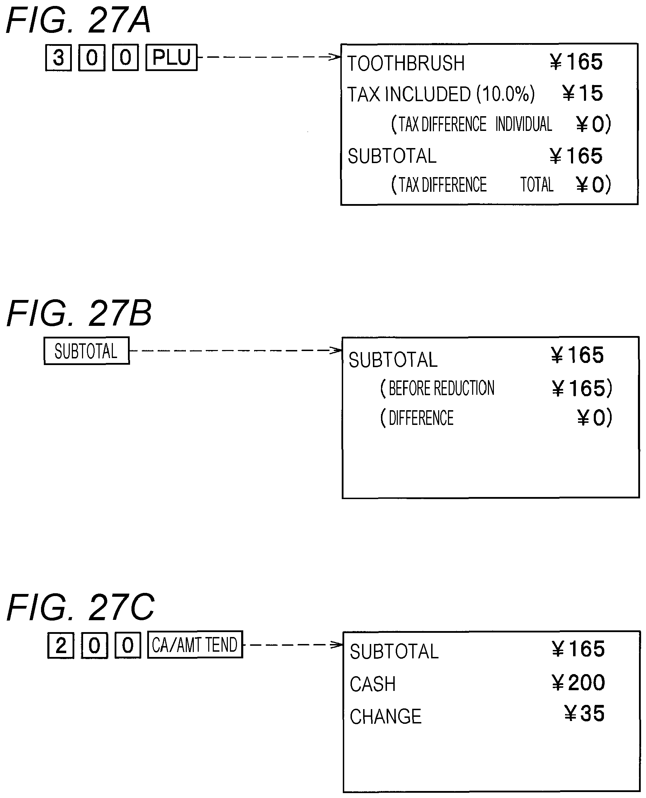

Figs. 27A to 27C are diagrams illustrating operations and displays of when a toothbrush is registered as an item, including tax, in the case where the customer display unit 35 can display multiple lines.

Fig. 27A illustrates the display of the customer display unit 35 of when first the numeric keys "3", "0", and "0" and then the "PLU" key are tapped on the touch panel display 34.

The item name "toothbrush" and the tax-inclusive unit price "¥165" are displayed in the first line of the customer display unit 35. "Tax included (10.0%)" and the tax amount "¥15" are displayed in the second line. "Tax difference" and "individual," and the tax difference "¥0" in this item are displayed inside parentheses in the third line. The tax difference allows the customer of the store to easily grasp that the reduced tax rate system does not cover the purchased item.

Furthermore, "subtotal" and the current subtotal amount "¥165" are displayed in the fourth line. "Tax difference" and "total," and the tax difference "¥0" in the subtotal are displayed inside parentheses in the fifth line. The tax difference allows the customer of the store to easily grasp how much he/she benefited in this transaction.

Fig. 27B illustrates the display of the customer display unit 35 of when the "subtotal" key is tapped on the touch panel display 34 in Fig. 27A.

"Subtotal" and the current subtotal amount "¥165" are displayed in the first line of the customer display unit 35. "Before reduction" and the pre-reduction subtotal amount "¥165" are displayed inside parenthesis in the second line. "Difference" and the difference "¥0" in the subtotal are displayed inside parentheses in the third line. The customer pays the clerk 200 yen at this point in time.

Fig. 27C illustrates the display of the customer display unit 35 of when first the numeric keys "2", "0", and "0" and then the "ca/amt tend" key are tapped on the touch panel display 34 in Fig. 27B.

"Subtotal" and the current subtotal amount "¥165" are displayed in the first line of the customer display unit 35. "Cash" and the amount tendered "¥200" are displayed in the second line. Furthermore, "change" and the amount of change "¥35" are displayed in the third line. With this operation, the transaction is closed to issue the receipt 2g illustrated in Fig. 29.

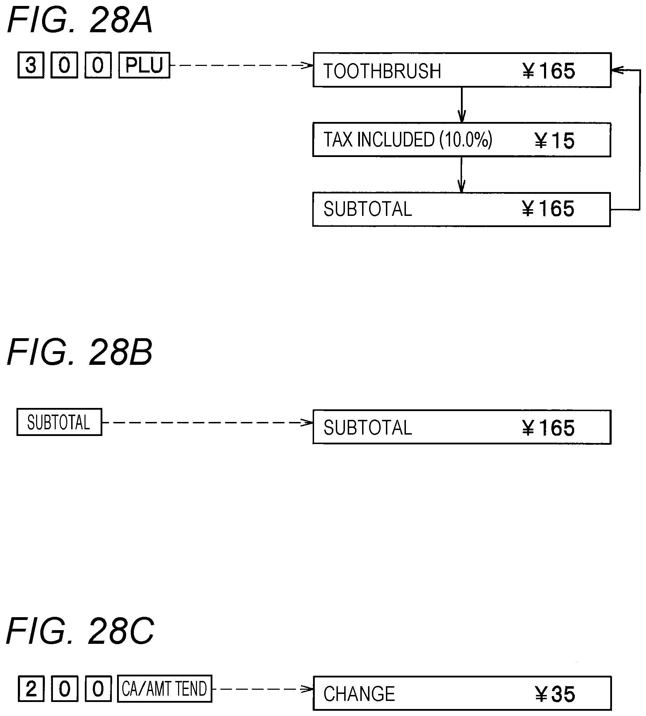

Figs. 28A to 28C are diagrams illustrating operations and displays of when a toothbrush is registered as an item, including tax, in the case where the customer display unit 35 can display only one line.

Fig. 28A illustrates the display of the customer display unit 35 of when first the numeric keys "3", "0", and "0" and then the "PLU" key are tapped on the touch panel display 34.

Firstly, the item name "toothbrush" and the tax-inclusive unit price "¥165" are displayed on the customer display unit 35. "Tax included (10.0%)" and the tax amount "¥15" are displayed after a lapse of a predetermined time. "Subtotal" and the current subtotal amount "¥165" are displayed after the lapse of the predetermined time. The first display is back again after the lapse of another predetermined time.

Fig. 28B illustrates the display of the customer display unit 35 of when the "subtotal" key is tapped on the touch panel display 34 in Fig. 28A.

"Subtotal" and the current subtotal amount "¥165" are displayed on the customer display unit 35. The customer pays the clerk 200 yen at this point in time.

Fig. 28C illustrates the display of the customer display unit 35 of when first the numeric keys "2", "0", and "0" and then the "ca/amt tend" key are tapped on the touch panel display 34 in Fig. 28B.

"Change" and the amount of change "¥35" are displayed on the touch panel display 34. With this operation, the transaction is closed to issue the receipt 2g illustrated in Fig. 29.

Fig. 29 is a diagram illustrating the receipt 2g of when a toothbrush has been registered as an item, including tax.

The receipt 2g includes the title field 21, the date and time field 22, an item field 51e, the total field 24, the cash field 25, the change field 26, the before-reduction field 27, and the difference field 28, which are printed on roll paper. That the unit price of the item name "toothbrush" is 165 yen, including a 10% tax of 15 yen, is printed in the item field 51e.

The amount "¥165" before the reduction when all items are subject to the standard tax rate is printed in the before-reduction field 27. "¥0" being the difference between the pre-reduction amount and the post-reduction amount is printed in the difference field 28. The difference field 28 of the receipt 2g allows the customer of the store to easily grasp that the reduced tax rate system does not cover the purchased item.

A difference description area where the before-reduction field 27 and the difference field 28 are printed is printed below a breakdown area including the total field 24 where the amount of sale is printed, the cash field 25 where the amount paid by the customer is printed, and the change field 26 where the amount of change is printed. Furthermore, boundary information indicating the division of an area is printed between the breakdown area and the difference description area. Consequently, it is possible to indicate the before-reduction field 27 and the difference field 28 as additional information and also allow the user to easily keep only the breakdown area by cutting off the before-reduction field 27 and the difference field 28.

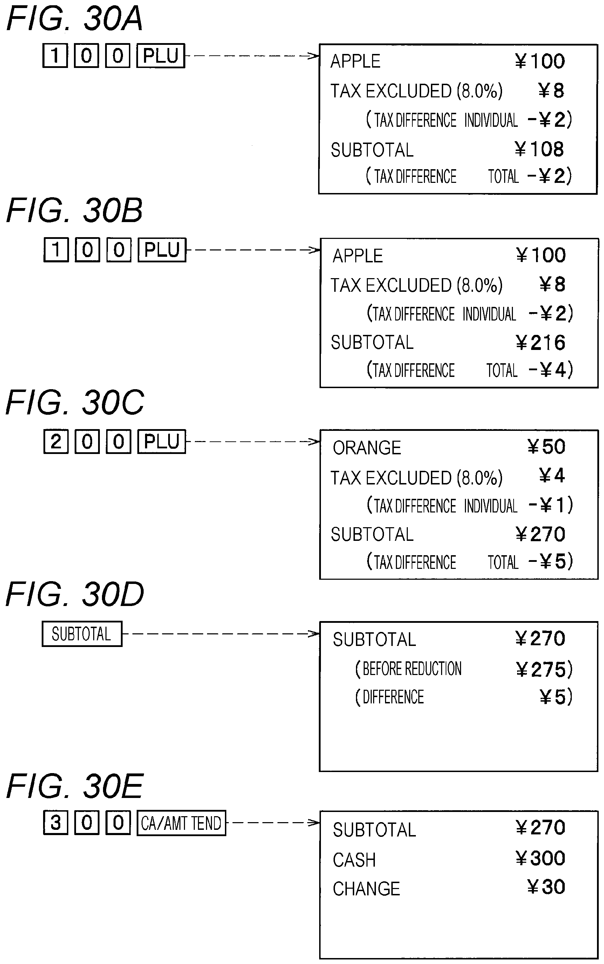

Figs. 30A to 30E are diagrams illustrating operations and displays of when two apples and an orange are registered as items, excluding tax, in the case where the customer display unit 35 can display multiple lines.

Fig. 30A illustrates the display of the customer display unit 35 of when first the numeric keys "1", "0", and "0" and then the "PLU" key are tapped on the touch panel display 34.

The item name "apple" and a tax-exclusive unit price "¥100" are displayed in the first line of the customer display unit 35. "Tax excluded (8.0%)" and the tax amount "¥8" are displayed in the second line. "Tax difference" and "individual," and the tax difference "-¥2" in this item are displayed inside parentheses in the third line. The tax difference allows the customer of the store to easily grasp how much he/she benefited in this item.

Furthermore, "subtotal" and the current subtotal amount "¥108" are displayed in the fourth line. "Tax difference" and "total," and the tax difference "-¥2" in the subtotal are displayed inside parentheses in the fifth line. The tax difference allows the customer of the store to easily grasp how much he/she benefited in this transaction.

Fig. 30B illustrates the display of the customer display unit 35 of when first the numeric keys "1", "0", and "0" and then the "PLU" key are tapped on the touch panel display 34 in Fig. 30A.

The item name "apple" and the tax-exclusive unit price "¥100" are displayed in the first line of the customer display unit 35. "Tax excluded (8.0%)" and the tax amount "¥8" are displayed in the second line. "Tax difference" and "individual," and the tax difference "-¥2" in this item are displayed inside parentheses in the third line. The tax difference allows the customer of the store to easily grasp how much he/she benefitted in this item.

Furthermore, "subtotal" and the current subtotal amount "¥216" are displayed in the fourth line. "Tax difference" and "total," and the tax difference "-¥4" in the subtotal are displayed inside parentheses in the fifth line. The tax difference allows the customer of the store to easily grasp how much he/she benefitted in this transaction.

Fig. 30C illustrates the display of the customer display unit 35 of when first the numeric keys "2", "0", and "0" and then the "PLU" key are tapped on the touch panel display 34 in Fig. 30B.

The item name "orange" and a tax-exclusive unit price "¥50" are displayed in the first line of the customer display unit 35. "Tax excluded (8.0%)" and the tax amount "¥4" are displayed in the second line. "Tax difference" and "individual," and the tax difference "-¥1" in this item are displayed inside parentheses in the third line. Furthermore, "subtotal" and the current subtotal amount "¥270" are displayed in the fourth line. "Tax difference" and "total," and the tax difference "-¥5" in the subtotal are displayed inside parentheses in the fifth line.

Fig. 30D illustrates the display of the customer display unit 35 of when the "subtotal" key is tapped on the touch panel display 34 in Fig. 30C.

"Subtotal" and the current subtotal amount "¥270" are displayed in the first line of the customer display unit 35. "Before reduction" and the pre-reduction subtotal amount "¥275" are displayed inside parenthesis in the second line. "Difference" and the difference "¥5" in the subtotal are displayed inside parentheses in the third line. The customer pays the clerk 300 yen at this point in time.

Fig. 30E illustrates the display of the customer display unit 35 of when first the numeric keys "3, "0", and "0" and then the "ca/amt tend" key are tapped on the touch panel display 34 in Fig. 30D.

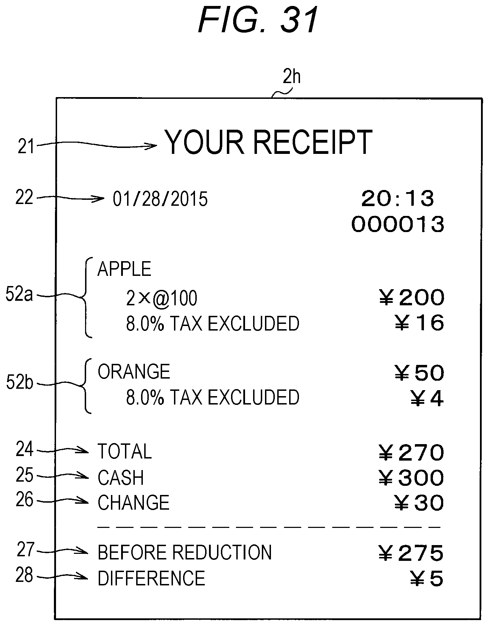

"Subtotal" and the current subtotal amount "¥270" are displayed in the first line of the customer display unit 35. "Cash" and the amount tendered "¥300" are displayed in the second line. Furthermore, "change" and the amount of change "¥30" are displayed in the third line. With this operation, the transaction is closed to issue a receipt 2h illustrated in Fig. 31.

Fig. 31 is a diagram illustrating the receipt 2h of when two apples and an orange have been registered as items, excluding tax.

The receipt 2h includes the title field 21, the date and time field 22, item fields 52a and 52b, the total field 24, the cash field 25, the change field 26, the before-reduction field 27, and the difference field 28, which are printed on roll paper. That the quantity of the item name "apple" is two, and they cost 100 yen each and 200 yen in total, excluding an 8% tax of 16 yen, is printed in the item field 52a. That the unit price of the item name "orange" is 50 yen, excluding an 8% tax of 4 yen, is printed in the item field 52b.

The amount "¥275" before the reduction when all items are subject to the standard tax rate is printed in the before-reduction field 27. "¥5" being the difference between the pre-reduction amount and the post-reduction amount is printed in the difference field 28. The difference field 28 of the receipt 2h allows the customer of the store to easily grasp how much he/she benefited from the reduced tax rate system.

A difference description area where the before-reduction field 27 and the difference field 28 are printed is printed below a breakdown area including the total field 24 where the amount of sale is printed, the cash field 25 where the amount paid by the customer is printed, and the change field 26 where the amount of change is printed. Furthermore, boundary information indicating the division of an area is printed between the breakdown area and the difference description area. Consequently, it is possible to indicate the before-reduction field 27 and the difference field 28 as additional information and also allow the user to easily keep only the breakdown area by cutting off the before-reduction field 27 and the difference field 28.

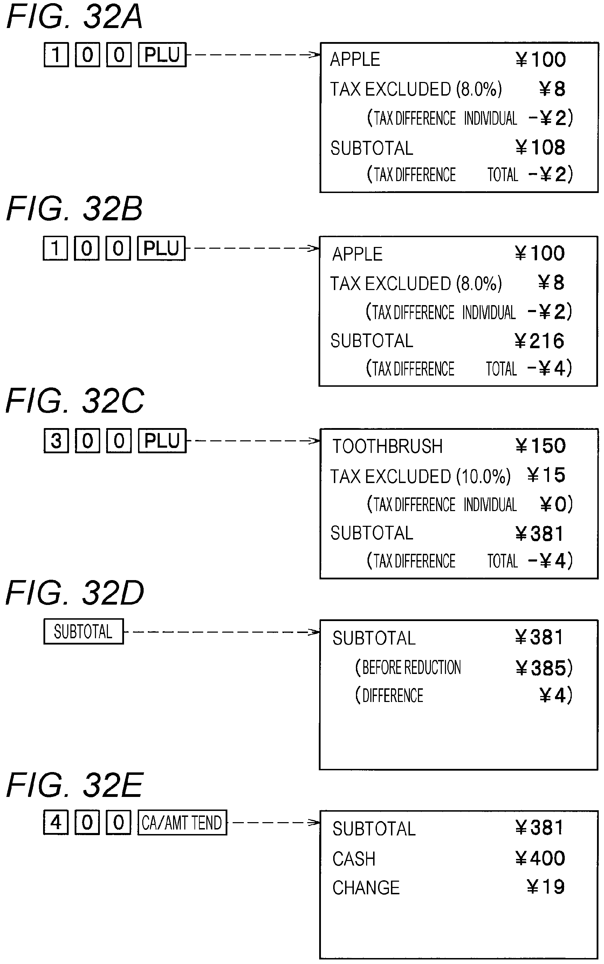

Figs. 32A to 32E are diagrams illustrating operations and displays of when two apples and a toothbrush are registered as items, excluding tax, in the case where the customer display unit 35 can display multiple lines.

Fig. 32A illustrates the display of the customer display unit 35 of when first the numeric keys "1", "0", and "0" and then the "PLU" key are tapped on the touch panel display 34.

The item name "apple" and the tax-exclusive unit price "¥100" are displayed in the first line of the customer display unit 35. "Tax excluded (8.0%)" and the tax amount "¥8" are displayed in the second line. "Tax difference" and "individual," and the tax difference "-¥2" in this item are displayed inside parentheses in the third line. The tax difference allows the customer of the store to easily grasp how much he/she benefited in this item.

Furthermore, "subtotal" and the current subtotal amount "¥108" are displayed in the fourth line. "Tax difference" and "total," and the tax difference "-¥2" in the subtotal are displayed inside parentheses in the fifth line. The tax difference allows the customer of the store to easily grasp how much he/she benefited in this transaction.

Fig. 32B illustrates the display of the customer display unit 35 of when first the numeric keys "1", "0", and "0" and then the "PLU" key are tapped on the touch panel display 34 in Fig. 32A.

The item name "apple" and the tax-exclusive unit price "¥100" are displayed in the first line of the customer display unit 35. "Tax excluded (8.0%)" and the tax amount "¥8" are displayed in the second line. "Tax difference" and "individual," and the tax difference "-¥2" in this item are displayed inside parentheses in the third line. Furthermore, "subtotal" and the current subtotal amount "¥216" are displayed in the fourth line. "Tax difference" and "total," and the tax difference "-¥4" in the subtotal are displayed inside parentheses in the fifth line.

Fig. 32C illustrates the display of the customer display unit 35 of when first the numeric keys "3", "0", and "0" and then the "PLU" key are tapped on the touch panel display 34 in Fig. 32B.

The item name "toothbrush" and a tax-exclusive unit price "¥150" are displayed in the first line of the customer display unit 35. "Tax excluded (10.0%)" and the tax amount "¥15" are displayed in the second line. "Tax difference" and "individual," and the tax difference "¥0" in this item are displayed inside parentheses in the third line. Furthermore, "subtotal" and the current subtotal amount "¥381 are displayed in the fourth line. "Tax difference" and "total," and the tax difference "-¥4" in the subtotal are displayed inside parentheses in the fifth line.

Fig. 32D illustrates the display of the customer display unit 35 of when the "subtotal" key is tapped on the touch panel display 34 in Fig. 32C.

"Subtotal" and the current subtotal amount "¥381" are displayed in the first line of the customer display unit 35. "Before reduction" and the pre-reduction subtotal amount "¥385" are displayed inside parenthesis in the second line. "Difference" and the difference "¥4" in the subtotal are displayed inside parentheses in the third line. The customer pays the clerk 400 yen at this point in time.

Fig. 32E illustrates the display of the customer display unit 35 of when first the numeric keys "4", "0", and "0" and then the "ca/amt tend" key are tapped on the touch panel display 34 in Fig. 32D.

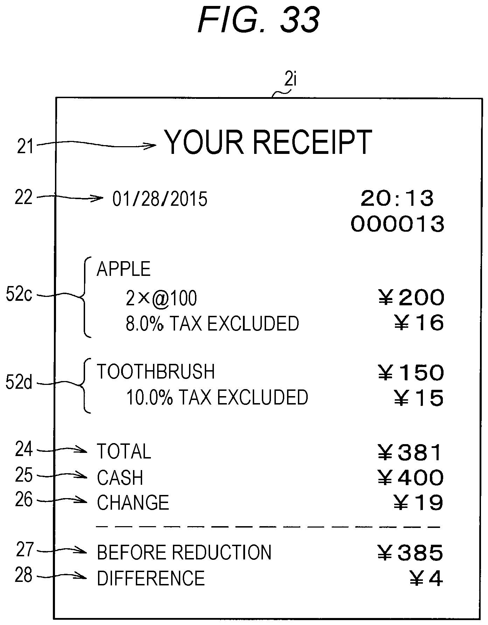

"Subtotal" and the current subtotal amount "¥381" are displayed in the first line of the customer display unit 35. "Cash" and the amount tendered "¥400" are displayed in the second line. Furthermore, "change" and the amount of change "¥19" are displayed in the third line. With this operation, the transaction is closed to issue a receipt 2i illustrated in Fig. 33.

Fig. 33 is a diagram illustrating the receipt 2i of when two apples and a toothbrush have been registered as items, excluding tax.

The receipt 2i includes the title field 21, the date and time field 22, item fields 52c and 52d, the total field 24, the cash field 25, the change field 26, the before-reduction field 27, and the difference field 28, which are printed on roll paper. That the quantity of the item name "apple" is two, and they cost 100 yen each and 200 yen in total, excluding an 8% tax of 16 yen, is printed in the item field 52c. That the unit price of the item name "toothbrush" is 150 yen, excluding a 10% tax of 15 yen, is printed in the item field 52d.

The amount "¥385" before the reduction when all items are subject to the standard tax rate is printed in the before-reduction field 27. "¥4" being the difference between the pre-reduction amount and the post-reduction amount is printed in the difference field 28. The difference field 28 of the receipt 2i allows the customer of the store to easily grasp how much he/she benefited from the reduced tax rate system.

A difference description area where the before-reduction field 27 and the difference field 28 are printed is printed below a breakdown area including the total field 24 where the amount of sale is printed, the cash field 25 where the amount paid by the customer is printed, and the change field 26 where the amount of change is printed. Furthermore, boundary information indicating the division of an area is printed between the breakdown area and the difference description area. Consequently, it is possible to indicate the before-reduction field 27 and the difference field 28 as additional information and also allow the user to easily keep only the breakdown area by cutting off the before-reduction field 27 and the difference field 28.

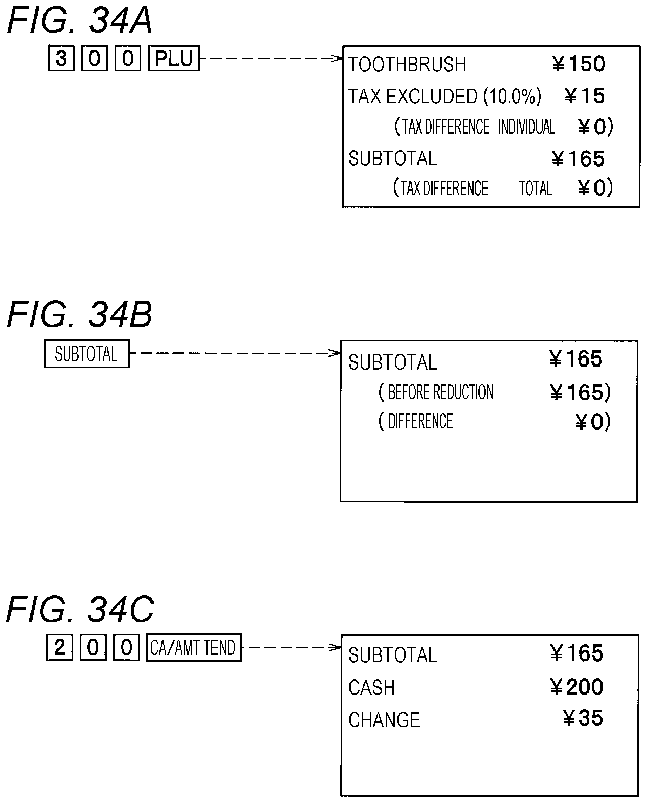

Figs. 34A to 34C are diagrams illustrating operations and displays of when a toothbrush is registered as an item, excluding tax, in the case where the customer display unit 35 can display multiple lines.

Fig. 34A illustrates the display of the customer display unit 35 of when first the numeric keys "3", "0", and "0" and the "PLU" key are tapped on the touch panel display 34.

The item name "toothbrush" and the tax-exclusive unit price "¥150" are displayed in the first line of the customer display unit 35. "Tax excluded (10.0%)" and the tax amount "¥15" are displayed in the second line. "Tax difference" and "individual," and the tax difference "¥0" in this item are displayed inside parentheses in the third line. Furthermore, "subtotal" and "¥165" are displayed in the fourth line. "Tax difference" and "total," and the tax difference "¥0" in the subtotal are displayed inside parentheses in the fifth line. The tax difference allows the customer of the store to easily grasp that the reduced tax rate system does not cover the purchased item.

Fig. 34B illustrates the display of the customer display unit 35 of when the "subtotal" key is tapped on the touch panel display 34 in Fig. 34A.

"Subtotal" and the current subtotal amount "¥165" are displayed in the first line of the customer display unit 35. "Before reduction" and the pre-reduction subtotal amount "¥165" are displayed inside parenthesis in the second line. "Difference" and the difference "¥0" in the subtotal are displayed inside parentheses in the third line. The customer pays the clerk 200 yen at this point in time.

Fig. 34C illustrates the display of the customer display unit 35 of when first the numeric keys "2", "0", and "0" and then the "ca/amt tend" key are tapped on the touch panel display 34 in Fig. 34B.

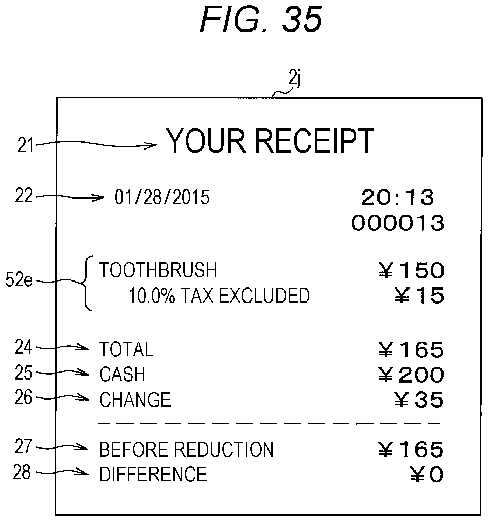

"Subtotal" and the current subtotal amount "¥165" are displayed in the first line of the customer display unit 35. "Cash" and the amount tendered "¥200" are displayed in the second line. Furthermore, "change" and the amount of change "¥35" are displayed in the third line. With this operation, the transaction is closed to issue a receipt 2j illustrated in Fig. 35.

Fig. 35 is a diagram illustrating the receipt 2j of when a toothbrush has been registered as an item, excluding tax.

The receipt 2j includes the title field 21, the date and time field 22, an item field 52e, the total field 24, the cash field 25, the change field 26, the before-reduction field 27, and the difference field 28, which are printed on roll paper. That the unit price of the item name "toothbrush" is 150 yen, excluding a 10% tax of 15 yen, is printed in the item field 52e.

The amount "¥165" before the reduction when all items are subject to the standard tax rate is printed in the before-reduction field 27. "¥0" being the difference between the pre-reduction amount and the post-reduction amount is printed in the difference field 28. The difference field 28 of the receipt 2j allows the customer of the store to easily grasp that the reduced tax rate system does not cover the purchased item.

A difference description area where the before-reduction field 27 and the difference field 28 are printed is printed below a breakdown area including the total field 24 where the amount of sale is printed, the cash field 25 where the amount paid by the customer is printed, and the change field 26 where the amount of change is printed. Furthermore, boundary information indicating the division of an area is printed between the breakdown area and the difference description area. Consequently, it is possible to indicate the before-reduction field 27 and the difference field 28 as additional information and also allow the user to easily keep only the breakdown area by cutting off the before-reduction field 27 and the difference field 28.

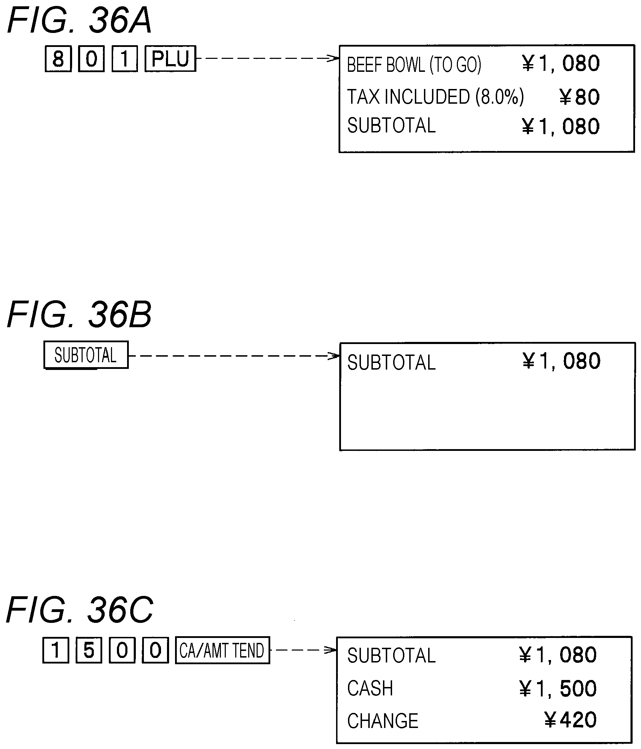

Figs. 36A to 36C are diagrams illustrating operations and displays of when a beef bowl to go is registered as an item, including tax, in the case where the customer display unit 35 can display three lines.

Fig. 36A illustrates the display of the customer display unit 35 of when first the numeric keys "8", "0", and "1" and then the "PLU" key are tapped on the touch panel display 34.

An item name "beef bowl (to go)" and a tax-inclusive unit price "¥1,080" are displayed in the first line of the customer display unit 35. "Tax included (8.0%)" and a tax amount "¥80" are displayed in the second line. "Subtotal" and the current subtotal amount "¥1,080" are displayed in the third line.

Fig. 36B illustrates the display of the customer display unit 35 of when the "subtotal" key is tapped on the touch panel display 34 in Fig. 36A.

"Subtotal" and the current subtotal amount "¥1,080" are displayed in the first line of the customer display unit 35. The customer pays the clerk 1,500 yen at this point in time.

Fig. 36C illustrates the display of the customer display unit 35 of when first the numeric keys "1", "5", "0", and "0" and then the "ca/amt tend" key are tapped on the touch panel display 34 in Fig. 36B.

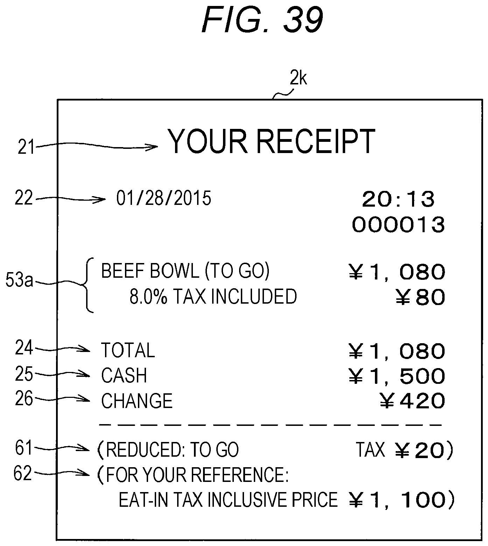

"Subtotal" and the current subtotal amount "¥1,080" are displayed in the first line of the customer display unit 35. "Cash" and the amount tendered "¥1,500" are displayed in the second line. Furthermore, "change" and the amount of change "¥420" are displayed in the third line. With this operation, the transaction is closed to issue a receipt 2k illustrated in Fig. 39.

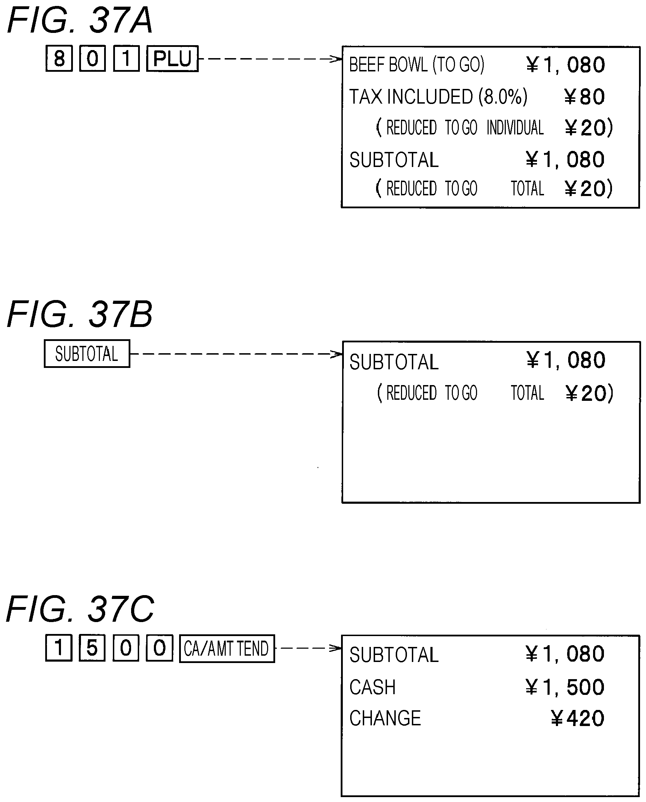

Figs. 37A to 37C are diagrams illustrating operations and displays of when a beef bowl to go is registered as an item, including tax, in the case where the customer display unit 35 can display multiple lines.

Fig. 37A illustrates the display of the customer display unit 35 of when first the numeric keys "8", "0", and "1" and then the "PLU" key are tapped on the touch panel display 34.

The item name "beef bowl (to go)" and the tax-inclusive unit price "¥1,080" are displayed in the first line of the customer display unit 35. "Tax included (8.0%)" and the tax amount "¥80" are displayed in the second line. "Reduced," "to go," and "individual," and the reduced amount "¥20" in this item are displayed inside parentheses in the third line. The reduced amount allows the customer of the store to easily grasp how much he/she benefited in this to-go item (reduced amount information).

Furthermore, "subtotal" and the current subtotal amount "¥1,080" are displayed in the fourth line. "Reduced," "to go," and "total," and the reduced amount "¥20" in the subtotal are displayed inside parentheses in the fifth line. The reduced amount allows the customer of the store to easily grasp how much he/she benefited in this to-go item (reduced amount information).

Fig. 37B illustrates the display of the customer display unit 35 of when the "subtotal" key is tapped on the touch panel display 34 in Fig. 37A.

"Subtotal" and the current subtotal amount "¥1,080" are displayed in the first line of the customer display unit 35. "Reduced," "to go," and "total," and the reduced amount "¥20" in the subtotal are displayed inside parentheses in the second line. The customer pays the clerk 1,500 yen at this point in time.

Fig. 37C illustrates the display of the customer display unit 35 of when first the numeric keys "1", "5", "0", and "0" and then the "ca/amt tend" key are tapped on the touch panel display 34 in Fig. 37B.

"Subtotal" and the current subtotal amount "¥1,080" are displayed in the first line of the customer display unit 35. "Cash" and the amount tendered "¥1,500" are displayed in the second line. Furthermore, "change" and the amount of change "¥420" are displayed in the third line. With this operation, the transaction is closed to issue the receipt 2k illustrated in Fig. 39.

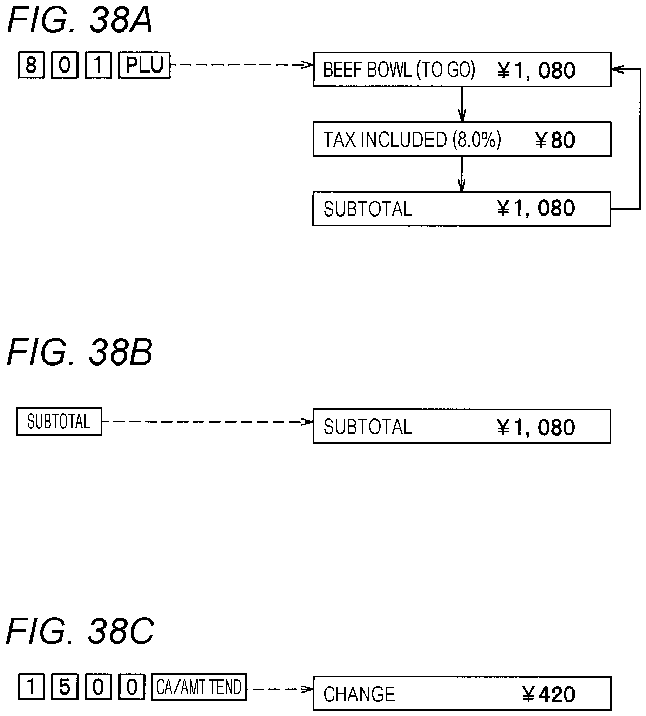

Figs. 38A to 38C are diagrams illustrating operations and displays of when a beef bowl to go is registered as an item, including tax, in the case where the customer display unit 35 can display only one line.

Fig. 38A illustrates the display of the customer display unit 35 of when first the numeric keys "8", "0", and "1" and then the "PLU" key are tapped on the touch panel display 34.

Firstly, the item name "beef bowl (to go)" and the tax-inclusive unit price "¥1,080" are displayed on the customer display unit 35. "Tax included (8.0%)" and the tax amount "¥80" are displayed after a lapse of a predetermined time. "Subtotal" and the current subtotal amount "¥1,080" are displayed after the lapse of the predetermined time. The first display is back again after the lapse of another predetermined time.

Fig. 38B illustrates the display of the customer display unit 35 of when the "subtotal" key is tapped on the touch panel display 34 in Fig. 38A.

"Subtotal" and the current subtotal amount "¥1,080" are displayed on the customer display unit 35. The customer pays the clerk 1,500 yen at this point in time.

Fig. 38C illustrates the display of the customer display unit 35 of when first the numeric keys "1", "5", "0", and "0" and then the "ca/amt tend" key are tapped on the touch panel display 34 in Fig. 38B.

"Change" and the amount of change "¥420" are displayed on the customer display unit 35. With this operation, the transaction is closed to issue the receipt 2k illustrated in Fig. 39.

Fig. 39 is a diagram illustrating the receipt 2k of when a beef bowl to go has been registered as an item, including tax.

The receipt 2k includes the title field 21, the date and time field 22, an item field 53a, the total field 24, the cash field 25, the change field 26, a reduced field 61, and a reference field 62, which are printed on roll paper. That the unit price of the item name "beef bowl (to go)" is 1,080 yen, including an 8.0% tax of 80 yen, is printed in the item field 53a.

The amount "¥20" that was reduced since the item was not to eat in but was to go is printed in the reduced field 61. The reduced field 61 allows the customer of the store to easily grasp the amount that was reduced since the item was not to eat in but was to go. The tax-inclusive price of the item to eat in, "¥1,100," is printed in the reference field 62.

A reduced description area where the reduced field 61 and the reference field 62 are printed is printed below a breakdown area including the total field 24 where the amount of sale is printed, the cash field 25 where the amount paid by the customer is printed, and the change field 26 where the amount of change is printed. Furthermore, boundary information indicating the division of an area is printed between the breakdown area and the reduced description area. Consequently, it is possible to indicate the reduced field 61 and the reference field 62 as additional information and also allow the user to easily keep only the breakdown area by cutting off the reduced field 61 and the reference field 62.

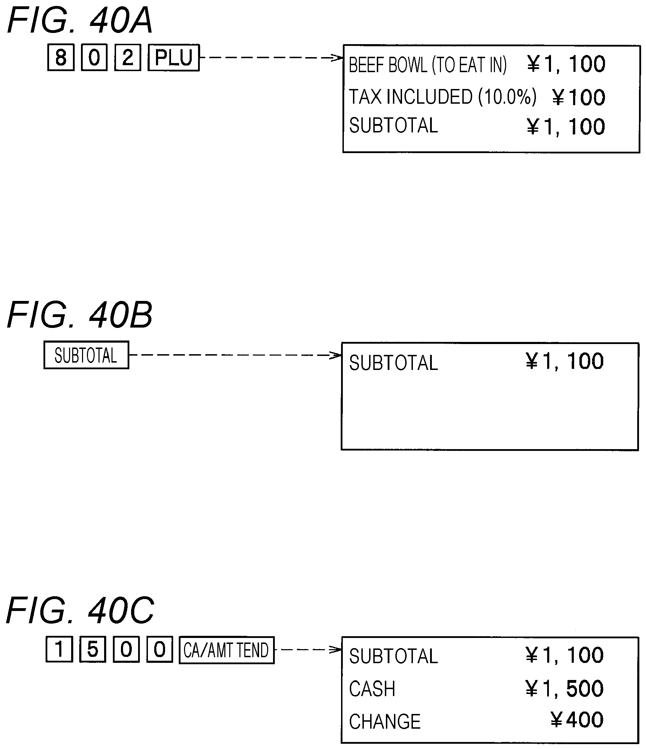

Figs. 40A to 40C are diagrams illustrating operations and displays of when a beef bowl to eat in is registered as an item, including tax, in the case where the customer display unit 35 can display three lines.

Fig. 40A illustrates the display of the customer display unit 35 of when first the numeric keys "8", "0", and "2" and then the "PLU" key are tapped on the touch panel display 34.

An item name "beef bowl (to eat in)" and a tax-inclusive unit price "¥1,100" are displayed in the first line of the customer display unit 35. "Tax included (10.0%)" and a tax amount "¥100" are displayed in the second line. "Subtotal" and the current subtotal amount "¥1,100" are displayed in the third line.

Fig. 40B illustrates the display of the customer display unit 35 of when the "subtotal" key is tapped on the touch panel display 34 in Fig. 40A.

"Subtotal" and the current subtotal amount "¥1,100" are displayed in the first line of the customer display unit 35. The customer pays the clerk 1,500 yen at this point in time.

Fig. 40C illustrates the display of the customer display unit 35 of when first the numeric keys "1", "5", "0", and "0" and then the "ca/amt tend" key are tapped on the touch panel display 34 in Fig. 40B.

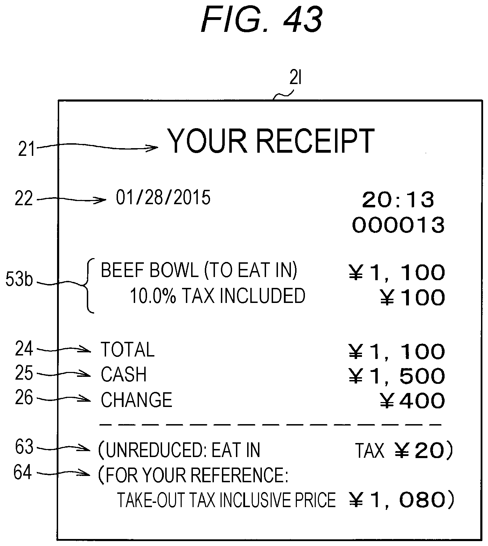

"Subtotal" and the current subtotal amount "¥1,100" are displayed in the first line of the customer display unit 35. "Cash" and the amount tendered "¥1,500" are displayed in the second line. Furthermore, "change" and the amount of change "¥400" are displayed in the third line. With this operation, the transaction is closed to issue a receipt 21 illustrated in Fig. 43.

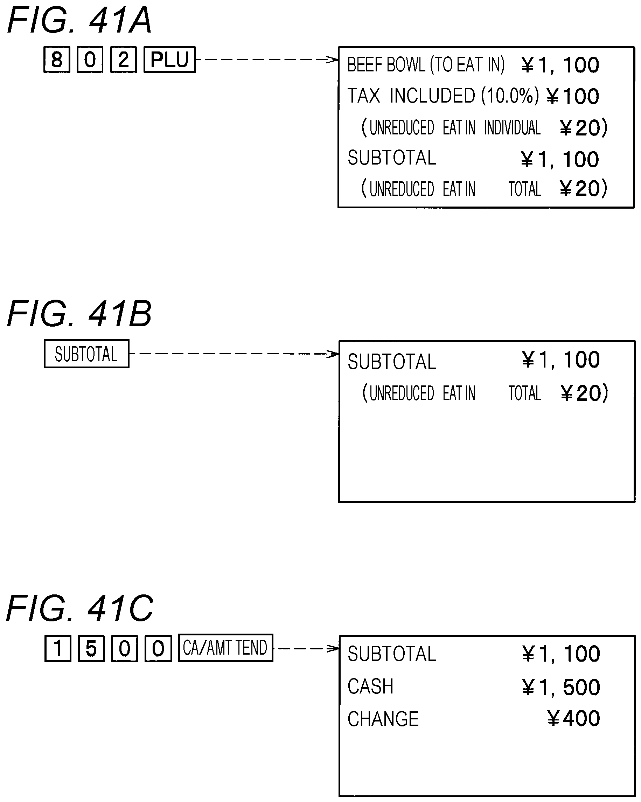

Figs. 41A to 41C are diagrams illustrating operations and displays of when a beef bowl to eat in is registered as an item, including tax, in the case where the customer display unit 35 can display multiple lines.

Fig. 41A illustrates the display of the customer display unit 35 of when first the numeric keys "8", "0", and "2" and then the "PLU" key are tapped on the touch panel display 34.

The item name "beef bowl (to eat in)" and the tax-inclusive unit price "¥1,100" are displayed in the first line of the customer display unit 35. "Tax included (10.0%)" and the tax amount "¥100" are displayed in the second line. "Unreduced," "eat in," and "individual," and an unreduced amount "¥20" in this item are displayed inside parentheses in the third line. The unreduced amount allows the customer of the store to easily grasp the amount that was not reduced since the item was to eat in (increased amount information).

Furthermore, "subtotal" and the current subtotal amount "¥1,100" are displayed in the fourth line. "Unreduced," "eat in," and "total," and the unreduced amount "¥20" in the subtotal are displayed inside parentheses in the fifth line. The unreduced amount allows the customer of the store to easily grasp the amount that was not reduced since the item was to eat in (increased amount information).

Fig. 41B illustrates the display of the customer display unit 35 of when the "subtotal" key is tapped on the touch panel display 34 in Fig. 41A.

"Subtotal" and the current subtotal amount "¥1,100" are displayed in the first line of the customer display unit 35. "Unreduced," "eat in," and "total," and the unreduced amount "¥20" in the subtotal are displayed in the second line. The customer pays the clerk 1,500 yen at this point in time.

Fig. 41C illustrates the display of the customer display unit 35 of when first the numeric keys "1", "5", "0", and "0" and then the "ca/amt tend" key are tapped on the touch panel display 34 in Fig. 41B.

"Subtotal" and the current subtotal amount "¥1,100" are displayed in the first line of the customer display unit 35. "Cash" and the amount tendered "¥1,500" are displayed in the second line. Furthermore, "change" and the amount of change "¥400" are displayed in the third line. With this operation, the transaction is closed to issue the receipt 21 illustrated in Fig. 43.

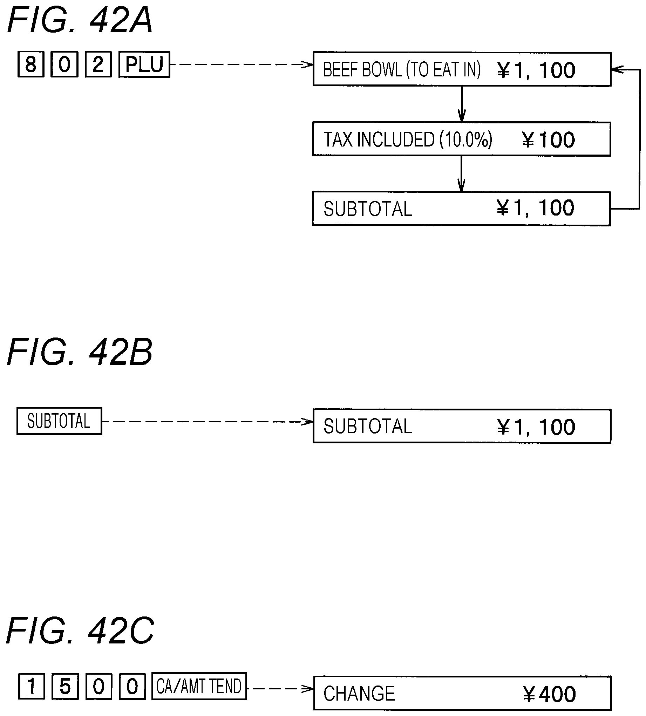

Figs. 42A to 42C are diagrams illustrating operations and displays of when a beef bowl to eat in is registered as an item, including tax, in the case where the customer display unit 35 can display only one line.

Fig. 42A illustrates the display of the customer display unit 35 of when first the numeric keys "8", "0", and "2" and then the "PLU" key are tapped on the touch panel display 34.

Firstly, the item name "beef bowl (to eat in)" and the tax-inclusive unit price "¥1,100" are displayed on the customer display unit 35. "Tax included (10.0%)" and the tax amount "¥100" are displayed after a lapse of a predetermined time. "Subtotal" and the current subtotal amount "¥1,100" are displayed after the lapse of the predetermined time. The first display is back again after the lapse of another predetermined time.

Fig. 42B illustrates the display of the customer display unit 35 of when the "subtotal" key is tapped on the touch panel display 34 in Fig. 42A.

"Subtotal" and the current subtotal amount "¥1,100" are displayed on the customer display unit 35. The customer pays the clerk 1,500 yen at this point in time.

Fig. 42C illustrates the display of the customer display unit 35 of when first the numeric keys "1", "5", "0", and "0" and then the "ca/amt tend" key are tapped on the touch panel display 34 in Fig. 42B.

"Change" and the amount of change "¥400" are displayed on the customer display unit 35. With this operation, the transaction is closed to issue the receipt 21 illustrated in Fig. 43.

Fig. 43 is a diagram illustrating the receipt 21 of when a beef bowl to eat in has been registered as an item, including tax.

The receipt 21 includes the title field 21, the date and time field 22, an item field 53b, the total field 24, the cash field 25, the change field 26, an unreduced field 63, and a reference field 64, which are printed on roll paper. That the unit price of the item name "beef bowl (to eat in)" is 1,100 yen, including a 10.0% tax of 100 yen, is printed in the item field 53b.

Information to the effect that the amount "¥20" that would have been reduced if the item had not been to eat in but had been to go was not applied is printed in the unreduced field 63. The unreduced field 63 allows the customer of the store to easily grasp the reduced amount of the item was to go. The tax-inclusive price of the item to go, "¥1,080," is printed in the reference field 64.

An unreduced description area where the unreduced field 63 and the reference field 64 are printed is printed below a breakdown area including the total field 24 where the amount of sale is printed, the cash field 25 where the amount paid by the customer is printed, and the change field 26 where the amount of change is printed. Furthermore, boundary information indicating the division of an area is printed between the breakdown area and the reduced description area. Consequently, it is possible to indicate the unreduced field 63 and the reference field 64 as additional information and also allow the user to easily keep only the breakdown area by cutting off the unreduced field 63 and the reference field 64.

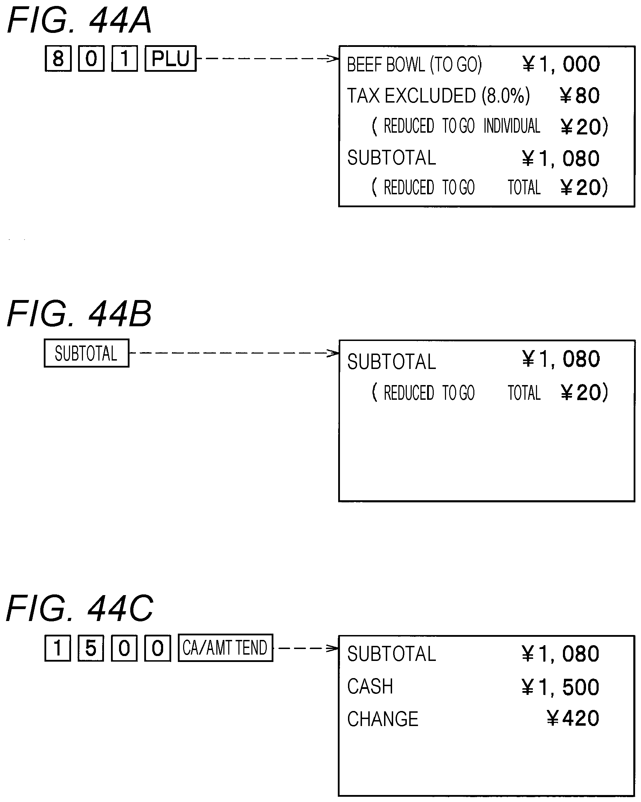

Figs. 44A to 44C are diagrams illustrating operations and displays of when a beef bowl to go is registered as an item, excluding tax, in the case where the customer display unit 35 can display multiple lines.

Fig. 44A illustrates the display of the customer display unit 35 of when first the numeric keys "8", "0", and "1" and then the "PLU" key are tapped on the touch panel display 34.

The item name "beef bowl (to go)" and the tax-exclusive unit price "¥1,000" are displayed in the first line of the customer display unit 35. "Tax excluded (8.0%)" and the tax amount "¥80" are displayed in the second line. "Reduced," "to go," and "individual," and the reduced amount "¥20" in this item are displayed inside parentheses in the third line. The reduced amount allows the customer of the store to easily grasp how much he/she benefited in this to-go item (reduced amount information).

Furthermore, "subtotal" and the current subtotal amount "¥1,080" are displayed in the fourth line. "Reduced," "to go," and "total," and the reduced amount "¥20" in the subtotal are displayed inside parentheses in the fifth line. The reduced amount allows the customer of the store to easily grasp how much he/she benefited in this to-go item (reduced amount information).

Fig. 44B illustrates the display of the customer display unit 35 of when the "subtotal" key is tapped on the touch panel display 34 in Fig. 44A.

"Subtotal" and the current subtotal amount "¥1,080" are displayed in the first line of the customer display unit 35. "Reduced," "to go," and "total," and the reduced amount "¥20" in subtotal are displayed inside parenthesis in the second line. The customer pays the clerk 1,500 yen at this point in time.

Fig. 44C illustrates the display of the customer display unit 35 of when first the numeric keys "1", "5", "0", and "0" and then the "ca/amt tend" key are tapped on the touch panel display 34 in Fig. 44B.

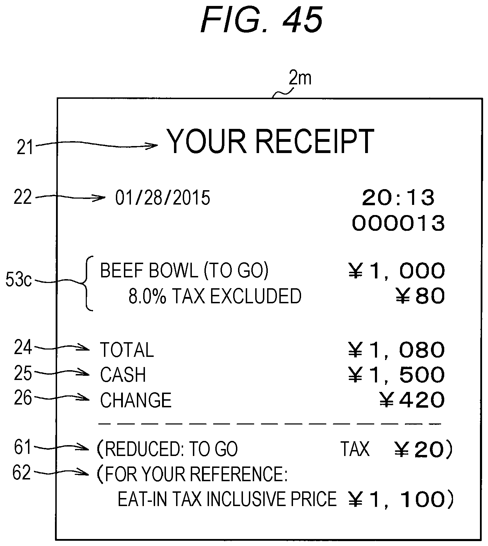

"Subtotal" and the current subtotal amount "¥1,080" are displayed in the first line of the customer display unit 35. "Cash" and the amount tendered "¥1,500" are displayed in the second line. Furthermore, "change" and the amount of change "¥420" are displayed in the third line. With this operation, the transaction is closed to issue a receipt 2m illustrated in Fig. 45.

Fig. 45 is a diagram illustrating the receipt 2m of when a beef bowl to go has been registered as an item, excluding tax.

The receipt 2m includes the title field 21, the date and time field 22, an item field 53c, the total field 24, the cash field 25, the change field 26, the reduced field 61, and the reference field 62, which are printed on roll paper. That the unit price of the item name "beef bowl (to go)" is 1,000 yen, excluding an 8.0% tax of 80 yen, is printed in the item field 53c.

The amount "¥20" that was reduced since the item was not to eat in but was to go is printed in the reduced field 61. The reduced field 61 allows the customer of the store to easily grasp the amount that was reduced since the item was not to eat in but was to go. The tax-inclusive price of this item to eat in, "¥1,100," is printed in the reference field 62.

A reduced description area where the reduced field 61 and the reference field 62 are printed is printed below a breakdown area including the total field 24 where the amount of sale is printed, the cash field 25 where the amount paid by the customer is printed, and the change field 26 where the amount of change is printed. Furthermore, boundary information indicating the division of an area is printed between the breakdown area and the reduced description area. Consequently, it is possible to indicate the reduced field 61 and the reference field 62 as additional information and also allow the user to easily keep only the breakdown area by cutting off the reduced field 61 and the reference field 62.

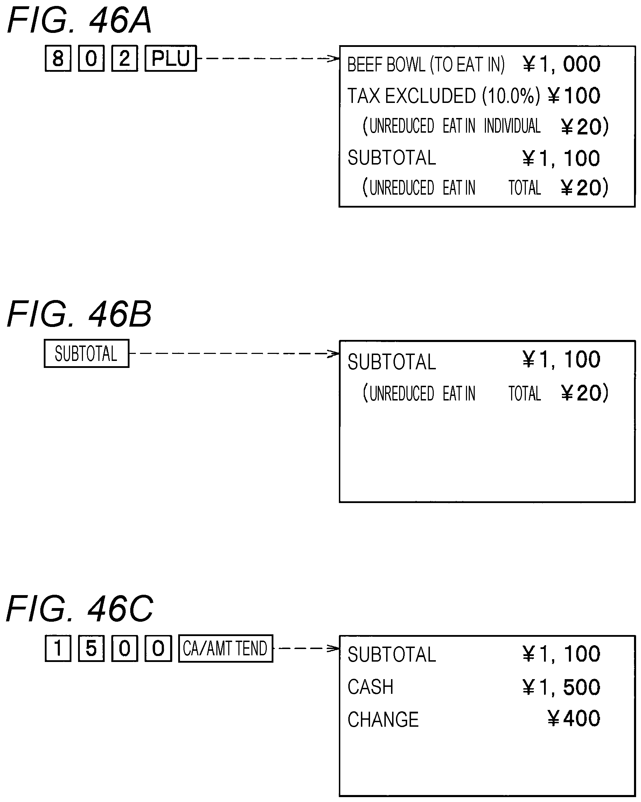

Figs. 46A to 46C are diagrams illustrating operations and displays of when a beef bowl to eat in is registered as an item, excluding tax, in the case where the customer display unit 35 can display multiple lines.

Fig. 46A illustrates the display of the customer display unit 35 of when first the numeric keys "8", "0", and "2" and then the "PLU" key are tapped on the touch panel display 34.

The item name "beef bowl (to eat in)" and the tax-exclusive unit price "¥1,000" are displayed in the first line of the customer display unit 35. "Tax excluded (10.0%)" and the tax amount "¥100" are displayed in the second line. "Unreduced," "eat in," and "individual," and the unreduced amount "¥20" in this item are displayed inside parentheses in the third line. The unreduced amount allows the customer of the store to easily grasp the amount that was not reduced since the item was to eat in (increased amount information).

Furthermore, "subtotal" and "¥1,100" are displayed in the fourth line. "Unreduced," "eat in," and "total," and "¥20" are displayed inside parentheses in the fifth line. The unreduced amount allows the customer of the store to easily grasp the amount that was not reduced since the item was to eat in (increased amount information).

Fig. 46B illustrates the display of the customer display unit 35 of when the "subtotal" key is tapped on the touch panel display 34 in Fig. 46A.

"Subtotal" and the current subtotal amount "¥1,100" are displayed in the first line of the customer display unit 35. "Unreduced," "eat in," and "total," and the unreduced amount "¥20" in the subtotal are displayed inside parenthesis in the second line. The customer pays the clerk 1,500 yen at this point in time.

Fig. 46C illustrates the display of the customer display unit 35 of when first the numeric keys "1", "5", "0", and "0" and then the "ca/amt tend" key are tapped on the touch panel display 34 in Fig. 46B.

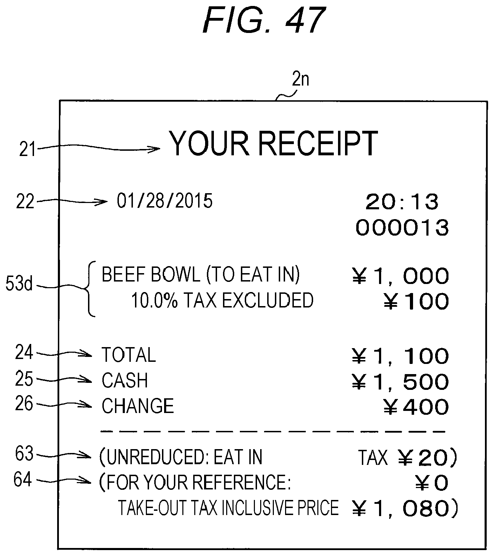

"Subtotal" and the current subtotal amount "¥1,100" are displayed in the first line of the customer display unit 35. "Cash" and the amount tendered "¥1,500" are displayed in the second line. Furthermore, "change" and the amount of change "¥400" are displayed in the third line. With this operation, the transaction is closed to issue a receipt 2n illustrated in Fig. 47.

Fig. 47 is a diagram illustrating the receipt 2n of when a beef bowl to eat in has been registered as an item, excluding tax.

The receipt 2n includes the title field 21, the date and time field 22, an item field 53d, the total field 24, the cash field 25, the change field 26, the unreduced field 63, and the reference field 64, which are printed on roll paper. That the unit price of the item name "beef bowl (to eat in)" is 1,000 yen, excluding a 10.0% tax of 100 yen, is printed in the item field 53d.

The amount "¥20" that would have been reduced if the item had not been to eat in but had been to go was not applied is printed in the unreduced field 63. The unreduced field 63 allows the customer of the store to easily grasp the amount that would have been reduced if the item had been to go. The tax-inclusive price of the item to go, "¥1,080," is printed in the reference field 64.

An unreduced description area where the unreduced field 63 and the reference field 64 are printed is printed below a breakdown area including the total field 24 where the amount of sale is printed, the cash field 25 where the amount paid by the customer is printed, and the change field 26 where the amount of change is printed. Furthermore, boundary information indicating the division of an area is printed between the breakdown area and the unreduced description area. Consequently, it is possible to indicate the unreduced field 63 and the reference field 64 as additional information and also allow the user to easily keep only the breakdown area by cutting off the unreduced field 63 and the reference field 64.

### (Modifications)

The present disclosure is not limited to the above embodiments, and can be modified within a range that does not depart from the gist of the present disclosure. Examples of the modifications include the following (a) to (f):
(a) A target for sale registration is not limited to an item but may be a service.
(b) Item or service sale registration is not limited to input with a department code. The electronic cash register may input, for example, a PLU of an item with a barcode scanner. At this point in time, the electronic cash register determines which of the standard tax rate and the reduced tax rate is applied to each item from a correspondence table between the PLU and the tax rate.
(c) A receipt output by the electronic cash register is not limited to a paper medium but may be an electronic receipt.
(d) The electronic cash register not only displays a subtotal amount and a difference alternately at the time of displaying the subtotal, but also may display the subtotal amount and the difference at the same time, or may provide displays sequentially by scrolling. The manner of display is not limited.
(e) The item registration method of the electronic cash register is not limited to the input of a department and the input of a PLU, and may be, for example, a method in which a registration key of each item is displayed on the screen, a method in which a barcode of each item is scanned, or a method in which each item is photographed for object recognition.
(f) The present disclosure may be configured to derive and output a difference between a tax amount or tax-inclusive price of an item to which an exceptional tax rate is applied based on a predetermined law and a tax amount or tax-inclusive price of when a general tax rate is applied to this item or service based on the predetermined law.

## Claims

1. A sales data processing apparatus comprising:
an acceptance unit configured to accept sale registration of an item or service; and
an output unit configured to derive a tax amount or tax-inclusive price of the item or service whose sale registration has been accepted by the acceptance unit based on a predetermined tax rate, and output the derived tax amount or tax-inclusive price, wherein
upon the item or service whose sale registration has been accepted by the acceptance unit being an item or service to which a first tax rate is applied, the output unit derives a difference between a tax amount or tax-inclusive price of a case where the first tax rate is applied to the item or service and a tax amount or tax-inclusive price of a case where a second tax rate different from the first tax rate is applied to the item or service, and also output the derived difference.

2. The sales data processing apparatus according to claim 1, wherein
the output unit is a receipt issuance unit configured to issue a receipt for the item or service whose sale registration has been accepted by the acceptance unit, and
the receipt issuance unit issues a receipt on which the difference is described.

3. The sales data processing apparatus according to claim 2, wherein the receipt issuance unit issues a receipt on which the difference is described below an amount of sale, an amount tendered, and an amount of change for the item or service whose sale registration has been accepted by the acceptance unit.

4. The sales data processing apparatus according to claim 2, wherein the receipt issuance unit issues a receipt on which boundary information indicating the division of an area is described between a breakdown area in which an amount of sale, an amount tendered, and an amount of change of the item or service whose sale registration has been accepted by the acceptance unit are described and a difference description area in which the difference is described.

5. The sales data processing apparatus according to claim 1, wherein also upon the item or service whose sale registration has been accepted by the acceptance unit being an item or service to which the second tax rate is applied, the output unit derives the difference and also outputs the derived difference.

6. The sales data processing apparatus according to claim 5, wherein the output unit outputs the difference as reduced amount information upon the item or service whose sale registration has been accepted by the acceptance unit being an item or service to which the first tax rate is applied, and outputs the difference as increased amount information upon the item or service whose sale registration has been accepted by the acceptance unit being an item or service to which the second tax rate is applied.

7. The sales data processing apparatus according to claim 1, wherein
the first tax rate is an exceptional tax rate in a predetermined law, and
the second tax rate is a general tax rate in the predetermined law.

8. A sales data processing method comprising the steps of:
accepting sale registration of an item or service; and
deriving a tax amount or tax-inclusive price of the item or service whose sale registration has been accepted in the acceptance step based on a predetermined tax rate, and outputting the derived tax amount or tax-inclusive price, wherein
the output step includes, upon the item or service whose sale registration has been accepted in the acceptance step being an item or service to which a first tax rate is applied, deriving a difference between a tax amount or tax-inclusive price of a case where the first tax rate is applied to the item or service and a tax amount or tax-inclusive price of a case where a second tax rate different from the first tax rate is applied to the item or service, and also outputting the derived difference.

9. The sales data processing method according to claim 8, wherein
the output step is a receipt issuance step of issuing a receipt for the item or service whose sale registration has been accepted in the acceptance step, and
the receipt issuance step includes issuing a receipt on which the difference is described.

10. The sales data processing method according to claim 9, wherein the receipt issuance step includes issuing a receipt on which the difference is described below an amount of sale, an amount tendered, and an amount of change of the item or service whose sale registration has been accepted in the acceptance step.

11. The sales data processing method according to claim 9, wherein the receipt issuance step includes issuing a receipt on which boundary information indicating the division of an area is described between a breakdown area in which an amount of sale, an amount tendered, and an amount of change of the item or service whose sale registration has been accepted in the acceptance step are described and a difference description area in which the difference is described.

12. The sales data processing method according to claim 8, wherein the output step includes deriving the difference and also outputting the derived difference also upon the item or service whose sale registration has been accepted in the acceptance step being an item or service to which the second tax rate is applied.

13. The sales data processing method according to claim 12, wherein the output step includes outputting the difference as reduced amount information upon the item or service whose sale registration has been accepted in the acceptance step being an item or service to which the first tax rate is applied, and outputting the difference as increased amount information upon the item or service whose sale registration has been accepted in the acceptance step being an item or service to which the second tax rate is applied.

14. The sales data processing method according to claim 8, wherein
the first tax rate is an exceptional tax rate in a predetermined law, and
the second tax rate is a general tax rate in the predetermined law.

15. A non-transitory computer-readable recording medium storing a program for causing a computer of a sales data processing apparatus to execute the following procedures:
accepting sale registration of an item or service; and
deriving a tax amount or tax-inclusive price of the item or service whose sale registration has been accepted in the acceptance procedure based on a predetermined tax rate, and outputting the derived tax amount or tax-inclusive price, wherein
the output procedure includes, upon the item or service whose sale registration has been accepted in the acceptance procedure being an item or service to which a first tax rate is applied, deriving a difference between a tax amount or tax-inclusive price of a case where the first tax rate is applied to the item or service and a tax amount or tax-inclusive price of a case where a second tax rate different from the first tax rate is applied to the item or service, and also outputting the derived difference.

16. The non-transitory computer-readable recording medium according to claim 15, wherein
the output procedure is the procedure of issuing a receipt for the item or service whose sale registration has been accepted in the acceptance procedure, and
the receipt issuance procedure includes issuing a receipt on which the difference is described.

17. The non-transitory computer-readable recording medium according to claim 16, wherein the receipt issuance procedure includes issuing a receipt on which the difference is described below an amount of sale, an amount tendered, and an amount of change of the item or service whose sale registration has been accepted in the acceptance procedure.

18. The non-transitory computer-readable recording medium according to claim 15, wherein the output procedure includes deriving the difference and also outputting the derived difference also upon the item or service whose sale registration has been accepted in the acceptance procedure being an item or service to which the second tax rate is applied.

19. The non-transitory computer-readable recording medium according to claim 18, wherein the output procedure includes outputting the difference as reduced amount information upon the item or service whose sale registration has been accepted in the acceptance procedure being an item or service to which the first tax rate is applied, and outputting the difference as increased amount information upon the item or service whose sale registration has been accepted in the acceptance procedure being an item or service to which the second tax rate is applied.

20. The non-transitory computer-readable recording medium according to claim 15, wherein
the first tax rate is an exceptional tax rate in a predetermined law, and
the second tax rate is a general tax rate in the predetermined law.
